# EUROPEAN PATENT SPECIFICATION

(11) **EP 2 797 240 B1**
(45) Date of publication and mention of the grant of the patent: **14.08.2019**
(21) Application number: 13165526.8
(22) Date of filing: 26.04.2013
(51) Int. Cl.: H04B 7/10, H04B 7/06, H04B 7/08

(54) **Antenna polarization optimization for wireless communications**
Antennenpolarisationsoptimierung für drahtlose Kommunikationen
Optimisation de polarisation d'antenne pour des communications sans fil

(43) Date of publication of application: 29.10.2014
(73) Proprietor: BlackBerry Limited, Waterloo, ON N2K 0A7 (CA)
(72) Inventor: Wu, Huan, Kanata, Ontario, K2K 3K1 (CA); Xin, Yan, Kanata, Ontario, K2K 3K1 (CA); Qu, Shouxing, Kanata, Ontario, K2K 3K1 (CA); Sheynman, Arnold, Rolling Meadows, Ill 60008 (US)
(74) Representative: Bryn-Jacobsen, Caelia

(56) References cited:
- WO-A1-01/54230
- US-A- 6 006 070
- US-A1- 2003 199 270
- US-A1- 2009 252 140

## Description

### BACKGROUND

For electromagnetic (EM) waves, polarization is normally used to describe the oscillating orientation of the electric field. For transmit and receive antennas, polarization is used to identify the orientation of the electric field of the EM waves. It has been shown by experiments and measurements that the polarization characteristics of millimeter EM waves (mmWaves), such as those with a carrier frequency at 60 GHz and higher, is significantly different from that of those EM waves with carrier frequencies below 6 GHz. One of the differences is that the mmWaves and even their reflections may remain strongly polarized during the propagation. As a result, the received signal may be strongly discriminated in terms of polarization by the antenna at the receiver and the antenna polarization may have a significant impact on the link budget of any mmWave communication systems.

The link loss due to the polarization characteristics of antennas and a propagation channel may result from sources in two categories. The first category is a polarization mismatch loss (PML) in power that occurs at the receiver's antenna, due to the polarization mismatch between the incident EM wave and the receiving antenna. The PML is dependent on the polarization characteristics of both transmitter (TX) and receiver (RX) antennas and the propagation environment, *i.e.,* line-of-sight (LOS) or non-line-of-sight (NLOS) reflections. In the case of NLOS, it is further dependent on reflection orders, reflecting medium and angles of reflections, *i.e.,* angles of departure (AODs) at TX and angles of arrival (AOAs) at RX.

In addition to the power degradation from PML, the second source or category of loss is the receiver processing loss (RPL) in performance that occurs in the receiver processing function units such as timing and frequency synchronization, channel estimation, channel equalization, demodulation and decoding, etc. The RPL is due to the changes in the channel impulse response (CIR) profile including delay spread and power distribution, which is also caused by the polarization mismatch. Therefore, the RPL is dependent on the whole set of parameters causing PML as well as the factors related to the algorithms and implementations of the receiver.

US 2009/252140 discloses an invention including a wireless communication system including a control station which transmits a wireless signal by one of a plurality of schemes, and a terminal station which receives the transmitted wireless signal using a plurality of directional antennas by one of a plurality of schemes. The control station repeatedly transmits a wireless signal while sequentially switching the plurality of schemes. The terminal station switches the plurality of schemes at a cycle different from the switching cycle of the control station, changes the directivity direction of the directional antenna every time the terminal station receives all wireless signals transmitted by the plurality of schemes, and detects the reception state of each of the wireless signals which have been transmitted by the plurality of schemes and received in the directivity directions of the directional antenna.

US 2003/199270 discloses an invention relating to a radio system and a transceiver method. The method comprises transmitting (402a) a signal of at least one type by a transceiver of the first type; receiving (404a) a signal by a transceiver of the second type with at least two differently polarized antennas; performing (406a), by the transceiver of the second type, measurements of the received signal to determine its polarization; determining (408a) the polarization of the transceiver of the first type; adjusting (410a) the signal transmitted by the transceiver of the second type in such a way that the polarization of the signal is matched with the polarization used by the transceiver of the first type; transmitting (412a) at least two orthogonally polarized, polarization-matched signals by the transceiver of the second type;; receiving (414a) the polarization-matched signals by the transceiver of the first type by using at least two antennas of different polarizations.

WO 01/54230 discloses a dynamically controlled polarization diversity system and method (100) for wireless communications comprises a transmitter, such as a base station (102), for transmitting signals with an adaptively controlled polarization state to a receiver, such as a mobile station (104). The polarization state may be adaptively varied by rotating a polarization angle, of the transmit signals. In one version, the polarization angle may be substantially continuously rotated from approximately 180 degrees to approximately 0 degrees in predetermined intervals. As the transmitter transmits signals with a varying polarization state, the receiver analyses the received transmit signals at the various states. The receiver may, for example, detect the received signal strength (RSSI) at each of the polarization states. The receiver then transmits a reply signal to the transmitter indicating the relative RSSI for each of the polarization states. The transmitter thereafter transmits at the polarization state which has the highest RSSI.

The present invention is set out in the independent claims, with some optional features set out in the claims dependent thereto. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

### BRIEF Description of the drawings

The present disclosure may be understood, and its numerous objects, features and advantages obtained, when the following detailed description is considered in conjunction with the following drawings, in which:
Figure 1 depicts an exemplary system in which the present disclosure may be implemented;
Figure 2 shows a wireless-enabled communications environment including an embodiment of a client node;
Figure 3 is a simplified block diagram of an exemplary client node comprising a digital signal processor (DSP);
Figure 4 illustrates a flow chart of an exemplary method for performing forward link polarization training at a source device (SD) in accordance with one or more embodiments;
Figure 5 illustrates a flow chart of an exemplary method for performing forward link polarization training at a destination device (DD) in accordance with one or more embodiments;
Figure 6 illustrates a flow chart of an exemplary method for performing reverse link polarization training at a DD in accordance with one or more embodiments;
Figure 7 illustrates a flow chart of an exemplary method for performing reverse link polarization training at a SD in accordance with one or more embodiments;
Figure 8 illustrates a flow chart of an exemplary method for providing feedback from a SD to a DD regarding results from a reverse link polarization optimization in accordance with one or more embodiments;
Figure 9 illustrates a flow chart of an exemplary method for received feedback from a SD by a DD regarding results from a reverse link polarization optimization in accordance with one or more embodiments;
Figure 10 illustrates a flow chart of an exemplary method for performing joint beam forming (BF) and polarization training for a forward link at a SD in accordance with one or more embodiments;
Figure 11 illustrates a flow chart of an exemplary method for performing joint BF and polarization training for a forward link at a DD in accordance with one or more embodiments;
Figure 12 illustrates a flow chart of an exemplary method for performing joint BF and polarization optimization for a forward link during a pre-networking at a network controller (or SD) in accordance with one or more embodiments; and
Figure 13 illustrates a flow chart of an exemplary method for performing joint BF and polarization optimization for a forward link during a pre-networking at a DD in accordance with one or more embodiments.

### DETAILED DESCRIPTION

The present disclosure is directed in general to communications systems and methods for operating the same.

Embodiments are directed to a method for providing communication between a first device and a second device, the method comprising: iterating, by the first device, over a number of transmitter antenna polarization types in the first device, constructing, by the first device, a number of data units based on each of the transmitter antenna polarization types, transmitting, by the first device, each of the data units for each of a number of receiver antenna polarization types in the second device, receiving, by the first device, an indication of a transmitter antenna polarization type in the first device included in the number of transmitter antenna polarization types in the first device, and transmitting, by the first device, data using the indicated transmitter antenna polarization type.

Embodiments are directed to a device comprising: at least one processor, and memory having instructions stored thereon that, when executed by the at least one processor, cause the device to: iterate over a number of transmitter antenna polarization types in the device, construct a number of data units based on each of the transmitter antenna polarization types, transmit each of the data units for each of a number of receiver antenna polarization types in a second device, receive, from the second device, an indication of a transmitter antenna polarization type in the device included in the number of transmitter antenna polarization types in the device, and transmit data using the indicated transmitter antenna polarization type.

Embodiments are directed to a system comprising: a first device configured to transmit to a second device a plurality of data units based on a number of transmitter antenna polarization types in the first device and a number of receiver antenna polarization types in the second device, the second device is configured to receive the plurality of data units, select a transmitter antenna polarization type for the first device and a receiver antenna polarization type for the second device based on an evaluation of a performance of a communication link between the first device and the second device for each of the plurality of data units, and transmit an indication of the selected transmitter antenna polarization type for the first device to the first device.

Various illustrative embodiments of the present disclosure will now be described in detail with reference to the accompanying figures. While various details are set forth in the following description, it will be appreciated that the present disclosure may be practiced without these specific details, and that numerous implementation-specific decisions may be made to the disclosure described herein to achieve specific goals, such as compliance with process technology or design-related constraints, which will vary from one implementation to another. While such a development effort might be complex and time-consuming, it would nevertheless be a routine undertaking for those of skill in the art having the benefit of this disclosure. For example, selected aspects are shown in block diagram and flowchart form, rather than in detail, in order to avoid limiting or obscuring the present disclosure. In addition, some portions of the detailed descriptions provided herein are presented in terms of algorithms or operations on data within a computer memory. Such descriptions and representations are used by those skilled in the art to describe and convey the substance of their work to others skilled in the art.

As used herein, the terms "component," "system" and the like are intended to refer to a computer-related entity, either hardware, software, a combination of hardware and software, or software in execution. For example, a component may be, but is not limited to being, a processor, a process running on a processor, an object, an executable instruction sequence, a thread of execution, a program, or a computer. By way of illustration, both an application running on a computer and the computer itself can be a component. One or more components may reside within a process or thread of execution and a component may be localized on one computer or distributed between two or more computers.

As likewise used herein, the term "node" broadly refers to a connection point, such as a redistribution point or a communication endpoint, of a communication environment, such as a network. Accordingly, such nodes refer to an active electronic device capable of sending, receiving, or forwarding information over a communications channel. Examples of such nodes include data circuit-terminating equipment (DCE), such as a modem, hub, bridge or switch, and data terminal equipment (DTE), such as a handset, a printer or a host computer (e.g., a router, workstation or server). Examples of local area network (LAN) or wide area network (WAN) nodes include computers, packet switches, cable modems, Data Subscriber Line (DSL) modems, and wireless LAN (WLAN) access points. Examples of Internet or Intranet nodes include host computers identified by an Internet Protocol (IP) address, bridges and WLAN access points. Likewise, examples of nodes in cellular communication include base stations, relays, base station controllers, radio network controllers, home location registers (HLR), visited location registers (VLR), Gateway GPRS Support Nodes (GGSN), Serving GPRS Support Nodes (SGSN), Serving Gateways (S-GW), and Packet Data Network Gateways (PDN-GW).

Other examples of nodes include client nodes, server nodes, peer nodes and access nodes. As used herein, a client node may refer to wireless devices such as mobile telephones, smart phones, personal digital assistants (PDAs), handheld devices, portable computers, tablet computers, and similar devices or other user equipment (UE) that has telecommunications capabilities. Such client nodes may likewise refer to a mobile, wireless device, or alternatively, to devices that have similar capabilities that are not generally transportable, such as desktop computers, set-top boxes, or sensors. A network node, as used herein, generally includes all nodes with the exception of client nodes, server nodes and access nodes. Likewise, a server node, as used herein, refers to an information processing device (e.g., a host computer), or series of information processing devices, that perform information processing requests submitted by other nodes. As likewise used herein, a peer node may sometimes serve as client node, and at other times, a server node. In a peer-to-peer or overlay network, a node that actively routes data for other networked devices as well as itself may be referred to as a supemode.

An access node, as used herein, refers to a node that provides a client node access to a communication environment. Examples of access nodes include cellular network base stations and wireless broadband (e.g., WiFi, WiMAX, etc.) access points, which provide corresponding cell and WLAN coverage areas. WiGig® and its equivalents in the greater than 50GHz range are also examples of wireless broadband. As used herein, a macrocell is used to generally describe a traditional cellular network cell coverage area. Such macrocells are typically found in rural areas, along highways, or in less populated areas. As likewise used herein, a microcell refers to a cellular network cell with a smaller coverage area than that of a macrocell. Such micro cells are typically used in a densely populated urban area. Likewise, as used herein, a picocell refers to a cellular network coverage area that is less than that of a microcell. An example of the coverage area of a picocell may be a large office, a shopping mall, or a train station. A femtocell, as used herein, currently refers to the smallest commonly accepted area of cellular network coverage. As an example, the coverage area of a femtocell is sufficient for homes or small offices. Small cells use low power network nodes, which may include femtocells, picocells or even microcells, for the enhancement and evolution of the advanced cellular networks.

In general, a coverage area of less than two kilometers typically corresponds to a microcell, 200 meters or less for a picocell, and on the order of 10 meters for a femtocell. The actual dimensions of the cell may depend on the radio frequency of operation, the radio propagation conditions and the density of communications traffic. As likewise used herein, a client node communicating with an access node associated with a macrocell is referred to as a "macrocell client." Likewise, a client node communicating with an access node associated with a microcell, picocell, or femtocell is respectively referred to as a "microcell client," "picocell client," or "femtocell client."

The term "article of manufacture" (or alternatively, "computer program product") as used herein is intended to encompass a computer program accessible from any computer-readable device or media. For example, computer readable media can include but are not limited to magnetic storage devices (e.g., hard disk, floppy disk, magnetic strips, etc.), optical disks such as a compact disk (CD) or digital versatile disk (DVD), smart cards, and flash memory devices (e.g., card, stick, etc.).

The word "exemplary" is used herein to mean serving as an example, instance, or illustration. Any aspect or design described herein as "exemplary" is not necessarily to be construed as preferred or advantageous over other aspects or designs. Those of skill in the art will recognize many modifications may be made to this configuration without departing from the scope of the claimed subject matter. Furthermore, the disclosed subject matter may be implemented as a system, method, apparatus, or article of manufacture using standard programming and engineering techniques to produce software, firmware, hardware, or any combination thereof to control a computer or processor-based device to implement aspects detailed herein.

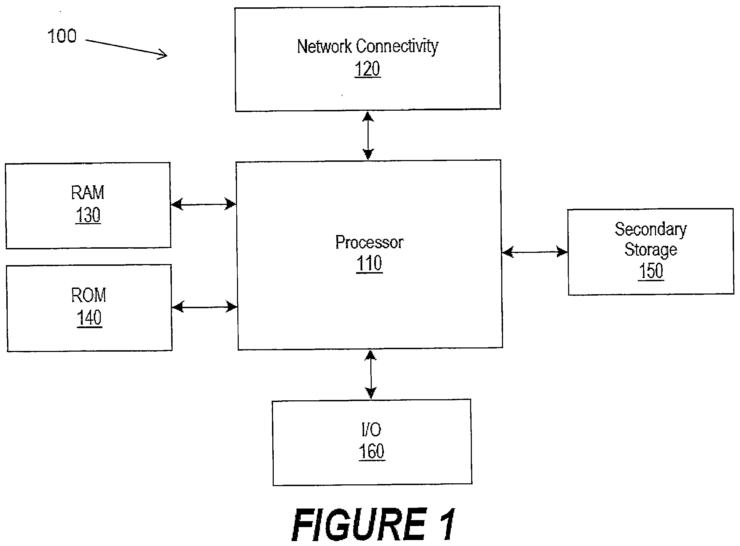

Figure 1 illustrates an example of a system 100 suitable for implementing one or more embodiments disclosed herein. In various embodiments, the system 100 comprises a processor 110, which may be referred to as a central processor unit (CPU) or digital signal processor (DSP), network connectivity interfaces 120, random access memory (RAM) 130, read only memory (ROM) 140, secondary storage 150, and input/output (I/O) devices 160. In some embodiments, some of these components may not be present or may be combined in various combinations with one another or with other components not shown. These components may be located in a single physical entity or in more than one physical entity. Any actions described herein as being taken by the processor 110 might be taken by the processor 110 alone or by the processor 110 in conjunction with one or more components shown or not shown in Figure 1.

The processor 110 executes instructions, codes, computer programs, or scripts that it might access from the network connectivity interfaces 120, RAM 130, or ROM 140. While only one processor 110 is shown, multiple processors may be present. Thus, while instructions may be discussed as being executed by a processor 110, the instructions may be executed simultaneously, serially, or otherwise by one or multiple processors 110 implemented as one or more CPU chips.

In various embodiments, the network connectivity interfaces 120 may take the form of modems, modem banks, Ethernet devices, universal serial bus (USB) interface devices, serial interfaces, token ring devices, fiber distributed data interface (FDDI) devices, wireless local area network (WLAN) devices (including radio, optical or infra-red signals), radio transceiver devices such as code division multiple access (CDMA) devices, global system for mobile communications (GSM) radio transceiver devices, long term evolution (LTE) radio transceiver devices, worldwide interoperability for microwave access (WiMAX) devices, and/or other well-known interfaces for connecting to networks, including Personal Area Networks (PANs) such as Bluetooth. These network connectivity interfaces 120 may enable the processor 110 to communicate with the Internet or one or more telecommunications networks or other networks from which the processor 110 might receive information or to which the processor 110 might output information.

The network connectivity interfaces 120 may also be capable of transmitting or receiving data wirelessly in the form of electromagnetic waves, such as radio frequency signals or microwave frequency signals. Information transmitted or received by the network connectivity interfaces 120 may include data that has been processed by the processor 110 or instructions that are to be executed by processor 110. The data may be ordered according to different sequences as may be desirable for either processing or generating the data or transmitting or receiving the data.

In various embodiments, the RAM 130 may be used to store volatile data and instructions that are executed by the processor 110. The ROM 140 shown in Figure 1 may likewise be used to store instructions and data that are read during execution of the instructions. The secondary storage 150 is typically comprised of one or more disk drives, solid state drives, or tape drives and may be used for non-volatile storage of data or as an overflow data storage device if RAM 130 is not large enough to hold all working data. Secondary storage 150 may likewise be used to store programs that are loaded into RAM 130 when such programs are selected for execution. The I/O devices 160 may include liquid crystal displays (LCDs), Light Emitting Diode (LED) displays, Organic Light Emitting Diode (OLED) displays, projectors, televisions, touch screen displays, keyboards, keypads, switches, dials, mice, track balls, track pads, voice recognizers, card readers, paper tape readers, printers, video monitors, or other well-known input/output devices.

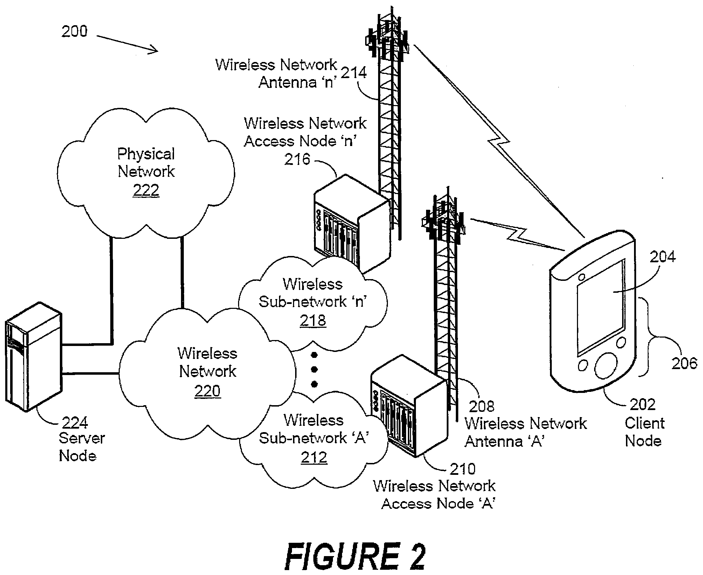

Figure 2 shows a wireless-enabled communications environment including an embodiment of a client node as implemented in an embodiment of the disclosure. Though illustrated as a mobile phone, the client node 202 may take various forms including a wireless handset, a pager, a smart phone, or a personal digital assistant (PDA). In various embodiments, the client node 202 may also comprise a portable computer, a tablet computer, a laptop computer, or any computing device operable to perform data communication operations. Many suitable devices combine some or all of these functions. In some embodiments, the client node 202 is not a general purpose computing device like a portable, laptop, or tablet computer, but rather is a special-purpose communications device such as a telecommunications device installed in a vehicle. The client node 202 may likewise be a device, include a device, or be included in a device that has similar capabilities but that is not transportable, such as a desktop computer, a set-top box, or a network node. In these and other embodiments, the client node 202 may support specialized activities such as gaming, inventory control, job control, task management functions, and so forth.

In various embodiments, the client node 202 includes a display 204. In these and other embodiments, the client node 202 may likewise include a touch-sensitive surface, a keyboard or other input keys 206 generally used for input by a user. The input keys 206 may likewise be a full or reduced alphanumeric keyboard such as QWERTY, DVORAK, AZERTY, and sequential keyboard types, or a traditional numeric keypad with alphabet letters associated with a telephone keypad. The input keys 206 may likewise include a trackwheel, an exit or escape key, a trackball, trackpad, touch sensitive input device and other navigational or functional keys, which may be moved to different positions, e.g., inwardly depressed, to provide further input function. The client node 202 may likewise present options for the user to select, controls for the user to actuate, and cursors or other indicators for the user to direct.

The client node 202 may further accept data entry from the user, including numbers to dial or various parameter values for configuring the operation of the client node 202. The client node 202 may further execute one or more software or firmware applications in response to user commands. These applications may configure the client node 202 to perform various customized functions in response to user interaction. Additionally, the client node 202 may be programmed or configured over-the-air (OTA), for example from a wireless network access node 'A' 210 through 'n' 216 (e.g., a base station), a server node 224 (e.g., a host computer), or a peer client node 202.

Among the various applications executable by the client node 202 are a web browser, which enables the display 204 to display a web page. The web page may be obtained from a server node 224 through a wireless connection with a wireless network 220. As used herein, a wireless network 220 broadly refers to any network using at least one wireless connection between two of its nodes. The various applications may likewise be obtained from a peer client node 202 or other system over a connection to the wireless network 220 or any other wirelessly-enabled communication network or system.

In various embodiments, the wireless network 220 comprises a plurality of wireless sub-networks (e.g., cells with corresponding coverage areas) 'A' 212 through 'n' 218. As used herein, the wireless sub-networks 'A' 212 through 'n' 218 may variously comprise a mobile wireless access network or a fixed wireless access network. In these and other embodiments, the client node 202 transmits and receives communication signals, which are respectively communicated to and from the wireless network nodes 'A' 210 through 'n' 216 by wireless network antennas 'A' 208 through 'n' 214 (e.g., cell towers). In turn, the communication signals are used by the wireless network access nodes 'A' 210 through 'n' 216 to establish a wireless communication session with the client node 202. As used herein, the network access nodes 'A' 210 through 'n' 216 broadly refer to any access node of a wireless network. As shown in Figure 2, the wireless network access nodes 'A' 210 through 'n' 216 are respectively coupled to wireless sub-networks 'A' 212 through 'n' 218, which are in turn connected to the wireless network 220.

In various embodiments, the wireless network 220 is coupled to a core network 222, e.g., a global computer network such as the Internet. Via the wireless network 220 and the core network 222, the client node 202 has access to information on various hosts, such as the server node 224. In these and other embodiments, the server node 224 may provide content that may be shown on the display 204 or used by the client node processor 110 for its operations. Alternatively, the client node 202 may access the wireless network 220 through a peer client node 202 acting as an intermediary, in a relay type or hop type of connection. As another alternative, the client node 202 may be tethered and obtain its data from a linked device that is connected to the wireless sub-network 212. Skilled practitioners of the art will recognize that many such embodiments are possible and the foregoing is not intended to limit the spirit, scope, or intention of the disclosure.

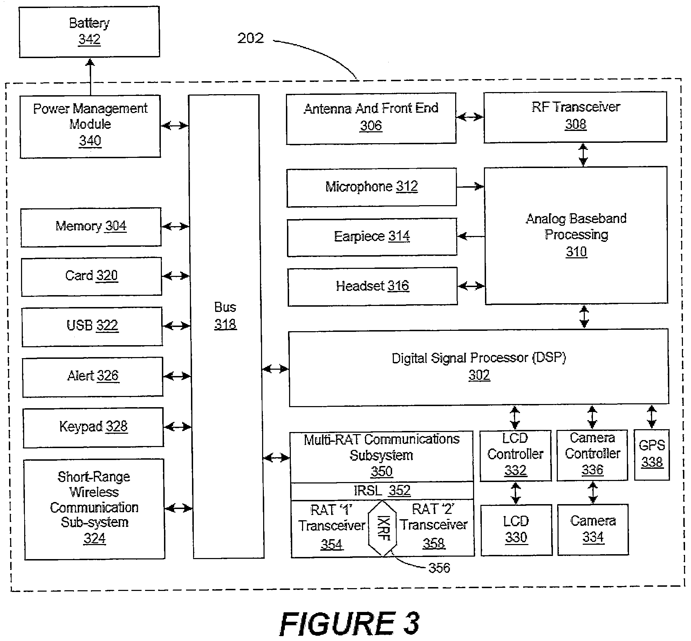

Figure 3 depicts a block diagram of an exemplary client node as implemented with a digital signal processor (DSP) in accordance with an embodiment of the disclosure. While various components of a client node 202 are depicted, various embodiments of the client node 202 may include a subset of the listed components or additional components not listed. As shown in Figure 3, the client node 202 includes a DSP 302 and a memory 304. As shown, the client node 202 may further include an antenna and front end unit 306, a radio frequency (RF) transceiver 308, an analog baseband processing unit 310, a microphone 312, an earpiece speaker 314, a headset port 316, a bus 318, such as a system bus or an input/output (I/O) interface bus, a removable memory card 320, a universal serial bus (USB) port 322, a short range wireless communication sub-system 324, an alert 326, a keypad 328, a liquid crystal display (LCD) 330, which may include a touch sensitive surface, an LCD controller 332, a charge-coupled device (CCD) camera 334, a camera controller 336, and a global positioning system (GPS) sensor 338, and a power management module 340 operably coupled to a power storage unit, such as a battery 342. In various embodiments, the client node 202 may include another kind of display that does not provide a touch sensitive screen. In one embodiment, the DSP 302 communicates directly with the memory 304 without passing through the input/output interface ("Bus") 318.

In various embodiments, the DSP 302 or some other form of controller or central processing unit (CPU) operates to control the various components of the client node 202 in accordance with embedded software or firmware stored in memory 304 or stored in memory contained within the DSP 302 itself. In addition to the embedded software or firmware, the DSP 302 may execute other applications stored in the memory 304 or made available via information media such as portable data storage media like the removable memory card 320 or via wired or wireless network communications. The application software may comprise a compiled set of machine-readable instructions that configure the DSP 302 to provide the desired functionality, or the application software may be high-level software instructions to be processed by an interpreter or compiler to indirectly configure the DSP 302.

The antenna and front end unit 306 may be provided to convert between wireless signals and electrical signals, enabling the client node 202 to send and receive information from a cellular network or some other available wireless communications network or from a peer client node 202. In an embodiment, the antenna and front end unit 306 may include multiple antennas to support beam forming and/or multiple input multiple output (MIMO) operations. As is known to those skilled in the art, MIMO operations may provide spatial diversity, which can be used to overcome difficult channel conditions or to increase data transmission throughput. Likewise, the antenna and front-end unit 306 may include antenna tuning or impedance matching components, RF power amplifiers, or low noise amplifiers. In another embodiment, the antenna and front end unit 306 may include control circuits for polarization selection and realization suitable for the disclosure.

In various embodiments, the RF transceiver 308 provides frequency shifting, converting received RF signals to baseband and converting baseband transmit signals to RF. In some descriptions a radio transceiver or RF transceiver may be understood to include other signal processing functionality such as synchronization, channel estimation, equalization, modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 310 or the DSP 302 or other central processing unit. In some embodiments, the RF Transceiver 308, portions of the Antenna and Front End 306, and the analog base band processing unit 310 may be combined in one or more processing units and/or application specific integrated circuits (ASICs).

Note that in this diagram the radio access technology (RAT) RAT1 and RAT2 transceivers 354, 358, the IXRF 356, the IRSL 352 and Multi-RAT subsystem 350 are operably coupled to the RF transceiver 308 and analog baseband processing unit 310 and then also coupled to the antenna and front end 306 via the RF transceiver 308. As there may be multiple RAT transceivers, there will typically be multiple antennas or front ends 306 or RF transceivers 308, one for each RAT or band of operation.

The analog baseband processing unit 310 may provide various analog processing of inputs and outputs for the RF transceivers 308 and the speech interfaces (312, 314, 316). For example, the analog baseband processing unit 310 receives inputs from the microphone 312 and the headset 316 and provides outputs to the earpiece 314 and the headset 316. To that end, the analog baseband processing unit 310 may have ports for connecting to the built-in microphone 312 and the earpiece speaker 314 that enable the client node 202 to be used as a cell phone. The analog baseband processing unit 310 may further include a port for connecting to a headset or other hands-free microphone and speaker configuration. The analog baseband processing unit 310 may provide digital-to-analog conversion in one signal direction and analog-to-digital conversion in the opposing signal direction. In various embodiments, at least some of the functionality of the analog baseband processing unit 310 may be provided by digital processing components, for example by the DSP 302 or by other central processing units.

The DSP 302 may perform synchronization, channel estimation, equalization, modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 302 may perform modulation, coding, interleaving, and spreading, and for a receiver function the DSP 302 may perform despreading, deinterleaving, decoding, and demodulation. In another embodiment, for example in an orthogonal frequency division multiplex access (OFDMA) technology application, for the transmitter function the DSP 302 may perform modulation, coding, interleaving, inverse fast Fourier transforming, and cyclic prefix appending, and for a receiver function the DSP 302 may perform cyclic prefix removal, fast Fourier transforming, deinterleaving, decoding, and demodulation. In other wireless technology applications, yet other signal processing functions and combinations of signal processing functions may be performed by the DSP 302. The polarization optimization procedures of this disclosure along with other protocols may be implemented in the DSP 302 in conjunction with other transmitting and receiving functions such as channel estimation and equalization, modulation/demodulation and coding/decoding.

The DSP 302 may communicate with a wireless network via the analog baseband processing unit 310. In some embodiments, the communication may provide Internet connectivity, enabling a user to gain access to content on the Internet and to send and receive e-mail or text messages. The input/output interface 318 interconnects the DSP 302 and various memories and interfaces. The memory 304 and the removable memory card 320 may provide software and data to configure the operation of the DSP 302. Among the interfaces may be the USB interface 322 and the short range wireless communication sub-system 324. The USB interface 322 may be used to charge the client node 202 and may also enable the client node 202 to function as a peripheral device to exchange information with a personal computer or other computer system. The short range wireless communication sub-system 324 may include an infrared port, a Bluetooth interface, an IEEE 802.11 compliant wireless interface, or any other short range wireless communication sub-system, which may enable the client node 202 to communicate wirelessly with other nearby client nodes and access nodes. The short-range wireless communication Sub-system 324 may also include suitable RF Transceiver, Antenna and Front End subsystems.

The input/output interface ("Bus") 318 may further connect the DSP 302 to the alert 326 that, when triggered, causes the client node 202 to provide a notice to the user, for example, by ringing, playing a melody, or vibrating. The alert 326 may serve as a mechanism for alerting the user to any of various events such as an incoming call, a new text message, and an appointment reminder by silently vibrating, or by playing a specific pre-assigned melody for a particular caller.

The keypad 328 couples to the DSP 302 via the I/O interface ("Bus") 318 to provide one mechanism for the user to make selections, enter information, and otherwise provide input to the client node 202. The keyboard 328 may be a full or reduced alphanumeric keyboard such as QWERTY, DVORAK, AZERTY and sequential types, or a traditional numeric keypad with alphabet letters associated with a telephone keypad. The input keys may likewise include a trackwheel, track pad, an exit or escape key, a trackball, and other navigational or functional keys, which may be inwardly depressed to provide further input function. Another input mechanism may be the LCD 330, which may include touch screen capability and also display text and/or graphics to the user. The LCD controller 332 couples the DSP 302 to the LCD 330.

The CCD camera 334, if equipped, enables the client node 202 to make digital pictures. The DSP 302 communicates with the CCD camera 334 via the camera controller 336. In another embodiment, a camera operating according to a technology other than Charge Coupled Device cameras may be employed. The GPS sensor 338 is coupled to the DSP 302 to decode global positioning system signals or other navigational signals, thereby enabling the client node 202 to determine its position. The GPS sensor 338 may be coupled to an antenna and front end (not shown) suitable for its band of operation. Various other peripherals may also be included to provide additional functions, such as radio and television reception.

In various embodiments, the client node (e.g., 202) comprises a first Radio Access Technology (RAT) transceiver 354 and a second RAT transceiver 358. As shown in Figure 3, and described in greater detail herein, the RAT transceivers '1' 354 and '2' 358 are in turn coupled to a multi-RAT communications subsystem 350 by an Inter-RAT Supervisory Layer Module 352. In turn, the multi- RAT communications subsystem 350 is operably coupled to the Bus 318. Optionally, the respective radio protocol layers of the first Radio Access Technology (RAT) transceiver 354 and the second RAT transceiver 358 are operably coupled to one another through an Inter-RAT eXchange Function (IRXF) Module 356.

In various embodiments, the network node (e.g. 224) acting as a server comprises a first communication link corresponding to data to/from the first RAT and a second communication link corresponding to data to/from the second RAT.

Embodiments of the disclosure may also include a housing in which the components of FIG. 3 are secured. In an example, the antenna, which can be part of the antenna and front end 306, is positioned in the housing. The antenna might not be readily visible or distinguishable from the housing. One or more slots may be available in the housing to support the antenna. In an example, the antenna can be mostly positioned in the side of the housing. In an example, the antenna can be at least partially positioned in a trackpad, display, or touchscreen of a device (e.g., a mobile device).

In some embodiments, communications may take place at one or more frequencies, such as at 60 GHz (which may be divided into one or more channels or bands, such as a first channel between 57.24 GHz and 59.4 GHz, a second channel between 59.4 GHz and 61.56 GHz, a third channel between 61.56 GHz and 63.72 GHz, and a fourth channel between 63.72 GHz and 65.88 GHz). In some embodiments, an antenna may achieve communication in a range of 60GHZ, +/-5GHz or +/- 6GHz.

Embodiments of the disclosure are directed to one or more systems, apparatuses, devices, and methods for mitigating the impact of link and processing losses caused by transmitter (TX) and receiver (RX) antenna polarization mismatches in wireless communications. The mismatch may be caused due to the TX antenna polarization types and directional patterns being unknown to the RX antenna, the RX antenna polarization types and directional patterns being unknown to the TX antenna, and the radio propagation environment being uncertain and unpredictable to either the TX antenna or the RX antenna. In some embodiments, the best or optimal combination of the TX and RX polarization types, referred to as the optimum antenna polarization scheme (APS), can be found with best possible link performance in an unknown propagation environment and for a given set of TX and RX polarization types and directional patterns. The link performance can be measured at the RX by a single or multiple performance metrics and can be fed back to the TX. Some of the performance metrics include the maximization of the received signal powers (e.g., received signal strength indication (RSSI)), the maximization of the signal to noise ratios (SNRs) and the minimization of the bit error rates (BERs), etc.

In some embodiments, a polarization training may be used to optimize the polarization characteristics between a TX and a RX in a radio link. In some embodiments, the polarization training is based on a sequence of data units (DUs, e.g., MAC frames, PHY packets and training fields in a frame/packet) exchanged between two communication devices, a source device (SD) and a destination device (DD), in two directions, a forward link from the SD to the DD and a reverse link from the DD to the SD. In the polarization training for the forward link, the information of the antenna polarization type (APT) being used by the transmitter of the SD is embedded in each of the transmitted data units (TDUs) from the SD to the DD. The link performance is evaluated in the receiver of the DD by receiving each of the DUs using each of the APTs available for the receiver of the DD. The receiving here refers to any general or specialized procedures used in a wireless receiver including all or some of the functional units such as polarization configuration, beamforming, downconverting, digitization, synchronization, channel estimation, equalization, demodulation and decoding, etc. Link performance metrics (e.g., SNR, signal strength, BER, etc.) can be computed for each of the received data units (RDUs) by the receiving procedure. The best link performance associated with a specific antenna polarization scheme, called the optimum antenna polarization scheme, can be determined based on a single or a set of the best link performance metrics considered.

The information of the optimum APS for the forward link direction (APS-S2D) may be fed back to the SD when the polarization training takes place in the reverse link from the DD to the SD. The polarization training for the reverse link may be similar to that for the forward link. One or more of the TDUs from the DD to the SD may include the optimum APS-S2D information acquired from the forward link training and the information of the APT being used by the transmitter of the DD itself. Link performance may be evaluated with performance metrics computed in the receiver of the SD for each of the RDUs of all possible combinations of TX and RX APTs considered. The optimum APS for the reverse link from the DD to the SD direction (APS-D2S) may be determined by a single or a set of the performance metrics considered. The optimum APS-D2S can be fed back to the DD with a TDU using the optimum APS-S2D trained for the forward link.

To facilitate the description of the polarization training process, the following notations are used herein:
N_TxAntPo1SD: the number of transmitter antenna polarization types in a source device;
N_RxAntPo1SD: the number of receiver antenna polarization types in a source device;
N_TxAntPo1DD: the number of transmitter antenna polarization types in a destination device;
N_RxAntPo1DD: the number of receiver antenna polarization types in a destination device;
TxAntPolSD(k): the k-th transmitter antenna polarization type in a source device, k=1... N_TxAntPolSD;
RxAntPolSD(k): the k-th receiver antenna polarization type in a source device, k=1... N_RxAntPolSD;
TxAntPolDD(k): the k-th transmitter antenna polarization type in a destination device, k=1... N_TxAntPolDD; and
RxAntPolDD(k): the k-th receiver antenna polarization type in a destination device, k=1... N_RxAntPolDD.

An antenna polarization type (APT) can be any form describing the orientation of the electric field the antenna emits or is capable of receiving, e.g., a horizontal linear polarization (HLP), a vertical linear polarization (VLP), a left-hand circular polarization (LHCP), a right-hand circular polarization (RHCP), etc., potentially in any combination. The polarization optimization techniques described herein can apply to wireless communications systems with any transmit/receive antenna polarization types and with any transmit and receive antenna directional patterns (ADPs). An antenna polarization scheme (APS) may indicate a specific combination of the antenna polarization types used in a transmitter of Device A and a receiver of Device B which is communicating with Device A. For example, APS-S2D={HLP, RHCP} identifies that the HLP is used in the transmitter of the SD and the RHCP is used in the receiver of the DD.

Antenna polarization and directionality may be closely related. The following notations are used herein:
N_TxAntDirSD: the number of transmitter antenna directional patterns in a source device;
N_RxAntDirSD: the number of receiver antenna directional patterns in a source device;
N_TxAntDirDD: the number of transmitter antenna directional patterns in a destination device;
N_RxAntDirDD: the number of receiver antenna directional patterns in a destination device;
TxAntDirSD(k): the k-th transmitter antenna directional pattern in a source device, k=1... N_TxAntDirSD;
RxAntDirSD(k): the k-th receiver antenna directional pattern in a source device, k=1... N_RxAntDirSD;
TxAntDirDD(k): the k-th transmitter antenna directional pattern in a destination device, k=1... N_TxAntDirDD; and
RxAntDirDD(k): the k-th receiver antenna directional pattern in a destination device, k=1... N_RxAntDirDD.

An antenna directional pattern (ADP) may be any form that describes the spatial angular dependence of the strength of the EM waves transmitted or received from an antenna, e.g., a sector in a sector switching antenna or a beam pattern formed by an antenna array, etc.

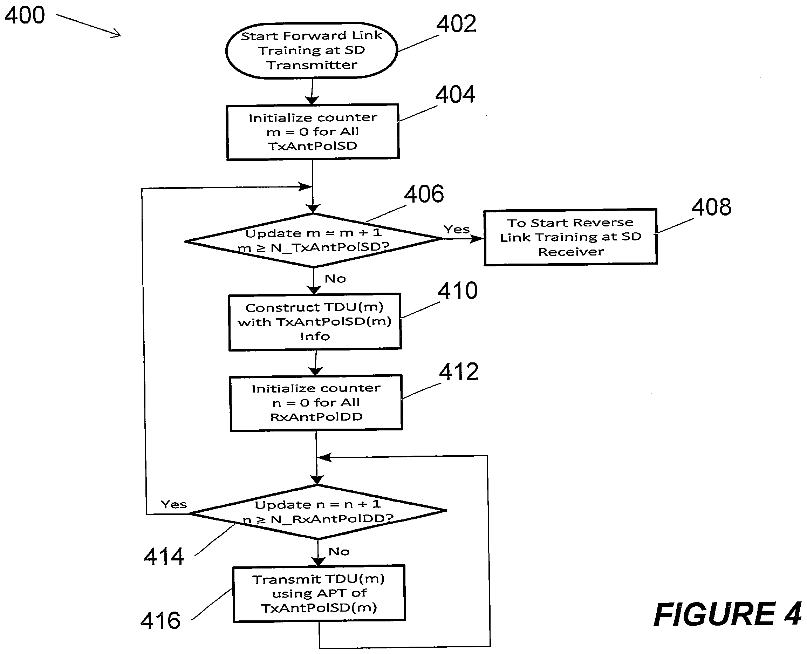

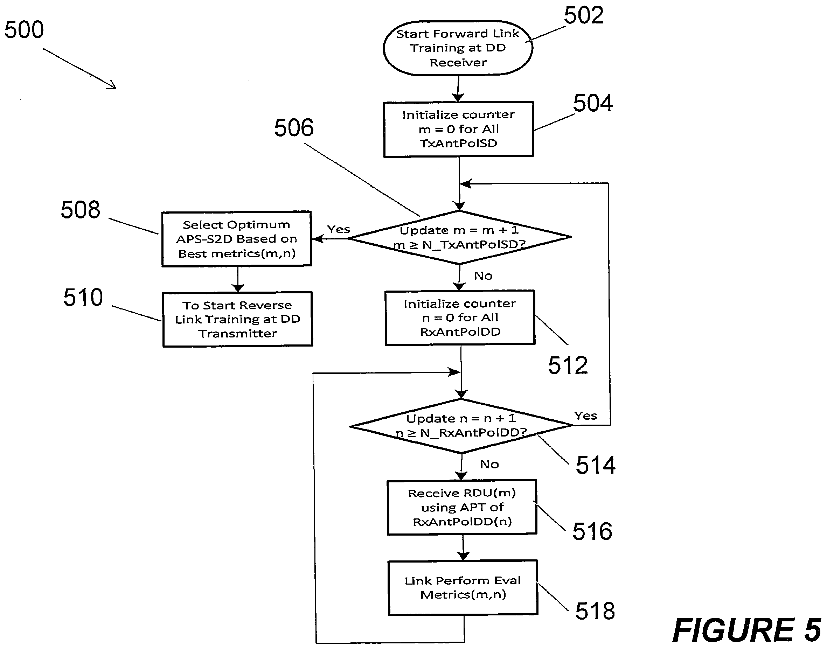

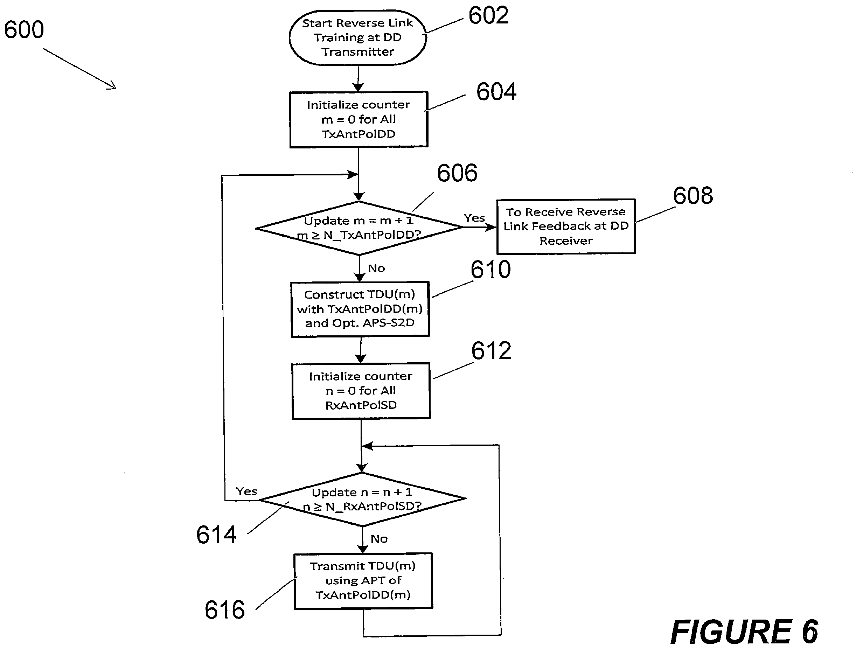

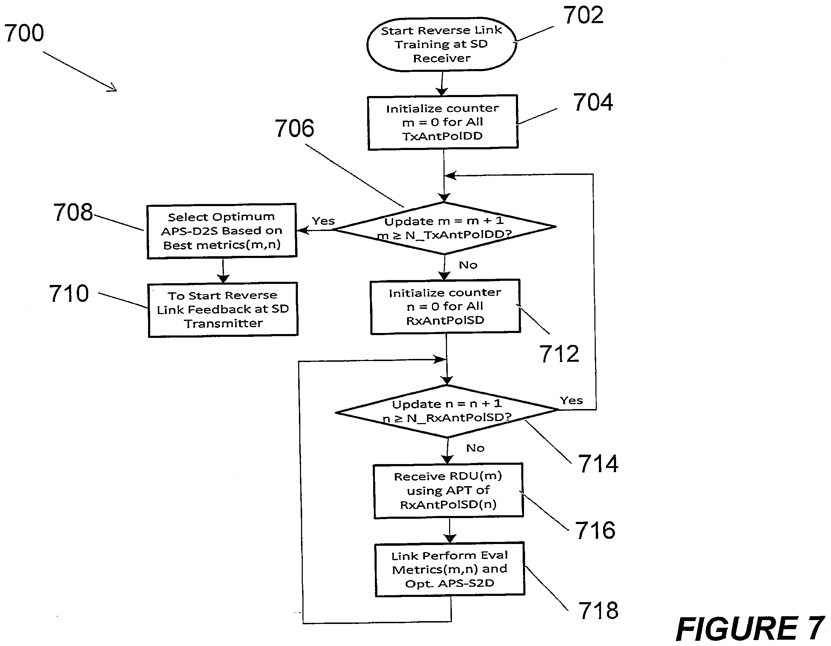

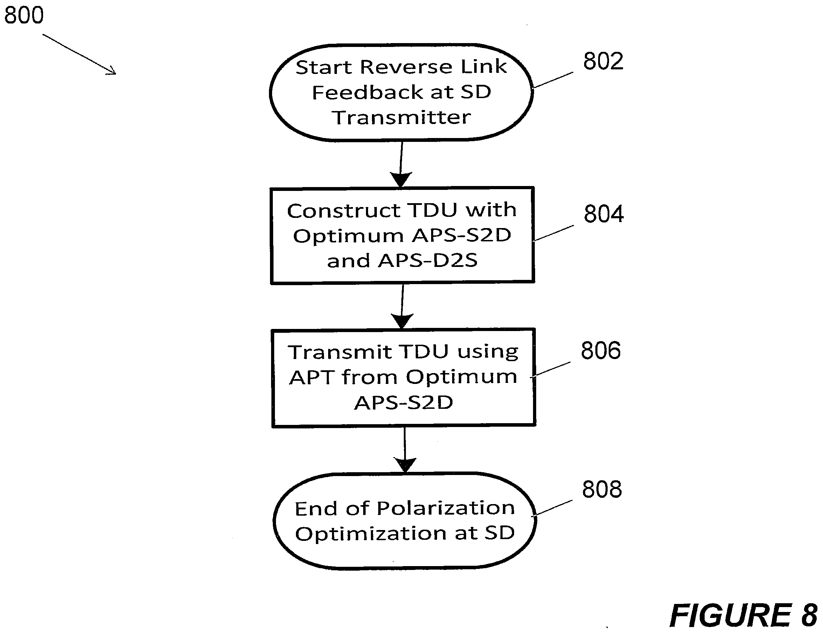

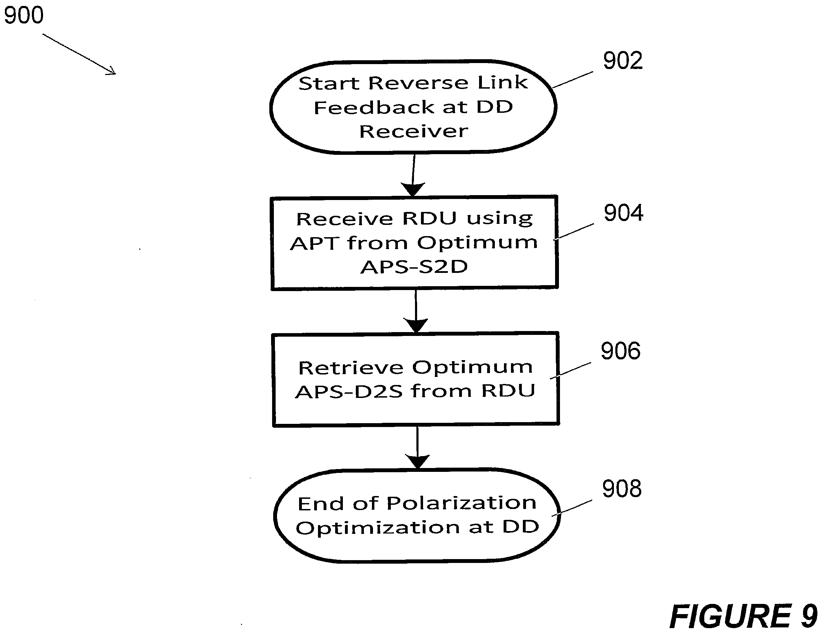

In some embodiments, the forward link (from source device (SD) to destination device (DD)) polarization training starts simultaneously at SD and DD as shown in Figure 4 and Figure 5, respectively. The forward link polarization training may be followed by the polarization training for the reverse link (from DD to SD) as shown in Figure 6 and Figure 7. A feedback of the polarization of the reverse link is shown in Figure 8 and Figure 9. Upon completion of the training process, both the SD and the DD may acquire the optimum APSs, APS-S2D and APS-D2S, for both the forward and reverse links. Other relevant information, such as the link performance metrics, may be transmitted in the reverse link training and the feedback process.

The approach to the polarization training may assume the knowledge of the N_RxAntPolDD in the SD and the N_RxAntPolSD in the DD. This assumption may be valid when both the SD and DD devices are in a post-networking stage where the devices have been associated and synchronized with a network managed by a network controller, e.g., an access point (AP) or a personal basic service set (PBSS) control point (PCP). The information can be exchanged between the SD and the DD via the network controller. In the case of a pre-networking stage where the information of the DD such as the N_RxAntPolDD, etc., may not be known by the SD, a specialized training process is described further below.

Turning now specifically to Figure 4, a flow chart of a method 400 is shown. The method 400 may be used to perform forward link polarization training at a SD.

In block 402, the method 400 may start.

In block 404, a counter (m) may be initialized (e.g., m=0) for all TxAntPolSD.

In block 406, the counter (m) may be incremented (e.g., m=m+1). As part of block 406, a determination may be made whether the counter (m) is greater than or equal to N_TxAntPolSD. If so (e.g., the "Yes" path is taken out of block 406), flow may proceed to block 408 to start reverse link training at the SD receiver, where block 408 may correspond to block 702 described below. Otherwise (e.g., the "No" path is taken out of block 406), flow may proceed from block 406 to block 410.

In block 410, a TDU may be constructed with TxAntPolSD(m) included as information or data therein.

In block 412, a second counter (n) may be initialized (e.g., n=0) for all RxAntPolDD.

In block 414, the second counter (n) may be incremented (e.g., n=n+1). As part of block 414, a determination may be made whether the second counter (n) is greater than or equal to N_RxAntPolDD. If so (e.g., the "Yes" path is taken out of block 414), flow may proceed from block 414 to block 406. Otherwise (e.g., the "No" path is taken out of block 414), flow may proceed from block 414 to block 416.

In block 416, the TDU constructed in block 410 may be transmitted. Flow may proceed from block 416 to block 414.

Turning now specifically to Figure 5, a flow chart of a method 500 is shown. The method 500 may be used to perform forward link polarization training at a DD.

In block 502, the method 500 may start.

In block 504, a counter (m) may be initialized (e.g., m=0) for all TxAntPolSD.

In block 506, the counter (m) may be incremented (e.g., m=m+1). As part of block 506, a determination may be made whether the counter (m) is greater than or equal to N_TxAntPolSD. If so (e.g., the "Yes" path is taken out of block 506), flow may proceed to block 508. Otherwise (e.g., the "No" path is taken out of block 506), flow may proceed from block 506 to block 512.

In block 508, the optimum APS for the forward link direction (APS-S2D) may be selected. The selection may be based on one or more metrics.

In block 510, reverse link training may be started at the DD transmitter. In some embodiments, block 510 may correspond to block 602 described below.

In block 512, a second counter (n) may be initialized (e.g., n=0) for all RxAntPolDD.

In block 514, the second counter (n) may be incremented (e.g., n=n+1). As part of block 514, a determination may be made whether the second counter (n) is greater than or equal to N_RxAntPolDD. If so (e.g., the "Yes" path is taken out of block 514), flow may proceed from block 514 to block 506. Otherwise (e.g., the "No" path is taken out of block 514), flow may proceed from block 514 to block 516.

In block 516, the DD may receive an RDU(m) using an APT of RxAntPolDD(n).

In block 518, a performance evaluation of the link may be performed. The performance evaluation may be based on the polarization type of the transmitter in the SD (which may be based on the counter m) and the polarization type of the receiver in the DD (which may be based on the second counter n). The performance evaluation may be stored for purposes of comparison and selection in block 508.

Turning now specifically to Figure 6, a flow chart of a method 600 is shown. The method 600 may be used to perform reverse link polarization training at a DD.

In block 602, the method 600 may start.

In block 604, a counter (m) may be initialized (e.g., m=0) for all TxAntPolDD.

In block 606, the counter (m) may be incremented (e.g., m=m+1). As part of block 606, a determination may be made whether the counter (m) is greater than or equal to N_TxAntPolDD. If so (e.g., the "Yes" path is taken out of block 606), flow may proceed to block 608 to receive reverse link feedback at the DD receiver, where block 608 may correspond to block 902 described below. Otherwise (e.g., the "No" path is taken out of block 606), flow may proceed from block 606 to block 610.

In block 610, a TDU may be constructed based on the TxAntPolDD(m) and/or the optimum APS-S2D (e.g., block 508).

In block 612, a second counter (n) may be initialized (e.g., n=0) for all RxAntPolSD.

In block 614, the second counter (n) may be incremented (e.g., n=n+1). As part of block 614, a determination may be made whether the second counter (n) is greater than or equal to N_RxAntPolSD. If so (e.g., the "Yes" path is taken out of block 614), flow may proceed from block 614 to block 606. Otherwise (e.g., the "No" path is taken out of block 614), flow may proceed from block 614 to block 616.

In block 616, the TDU constructed in block 610 may be transmitted. Flow may proceed from block 616 to block 614.

Turning now specifically to Figure 7, a flow chart of a method 700 is shown. The method 700 may be used to perform reverse link polarization training at a SD.

In block 702, the method 700 may start.

In block 704, a counter (m) may be initialized (e.g., m=0) for all TxAntPolDD.

In block 706, the counter (m) may be incremented (e.g., m=m+1). As part of block 706, a determination may be made whether the counter (m) is greater than or equal to N_TxAntPolDD. If so (e.g., the "Yes" path is taken out of block 706), flow may proceed to block 708. Otherwise (e.g., the "No" path is taken out of block 706), flow may proceed from block 706 to block 712.

In block 708, the optimum APS for the reverse link direction (APS-D2S) may be selected. The selection may be based on one or more metrics.

In block 710, reverse link feedback at the SD transmitter may be started. In some embodiments, block 710 may correspond to block 802 described below.

In block 712, a second counter (n) may be initialized (e.g., n=0) for all RxAntPolSD.

In block 714, the second counter (n) may be incremented (e.g., n=n+1). As part of block 714, a determination may be made whether the second counter (n) is greater than or equal to N_RxAntPolSD. If so (e.g., the "Yes" path is taken out of block 714), flow may proceed from block 714 to block 706. Otherwise (e.g., the "No" path is taken out of block 714), flow may proceed from block 714 to block 716.

In block 716, the SD may receive an RDU(m) using an APT of RxAntPolSD(n).

In block 718, a performance evaluation of the link may be performed. The performance evaluation may be based on the polarization type of the transmitter in the DD (which may be based on the counter m) and the polarization type of the receiver in the SD (which may be based on the second counter n). The performance evaluation may be stored for purposes of comparison and selection in block 708.

Turning now specifically to Figure 8, a flow chart of a method 800 is shown. The method 800 may be used by a SD to provide feedback to a DD regarding results from a reverse link polarization optimization.

In block 802, the method 800 may start.

In block 804, a TDU may be constructed. The TDU of block 804 may include the optimum APS-S2D (block 508) and/or the optimum APS-D2S (block 708).

In block 806, the TDU constructed in block 804 may be transmitted from the SD to the DD. The transmission may occur using the APT obtained from the optimum APS-S2D.

In block 808, the method 800 may end.

Turning now specifically to Figure 9, a flow chart of a method 900 is shown. The method 900 may be used by a DD to receive feedback from a SD regarding results from a reverse link polarization optimization.

In block 902, the method 900 may start.

In block 904, a RDU may be received. The RDU of block 904 may be received using the APT from the optimum APS-S2D (block 508).

In block 906, the optimum APS-D2S may be retrieved from the RDU of block 904.

In block 908, the method 900 may end.

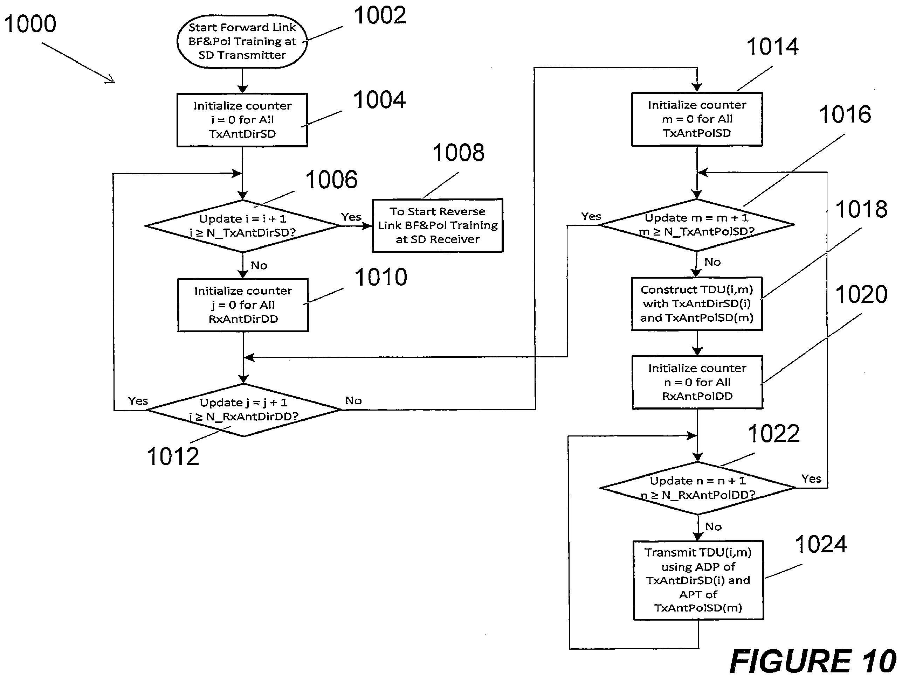

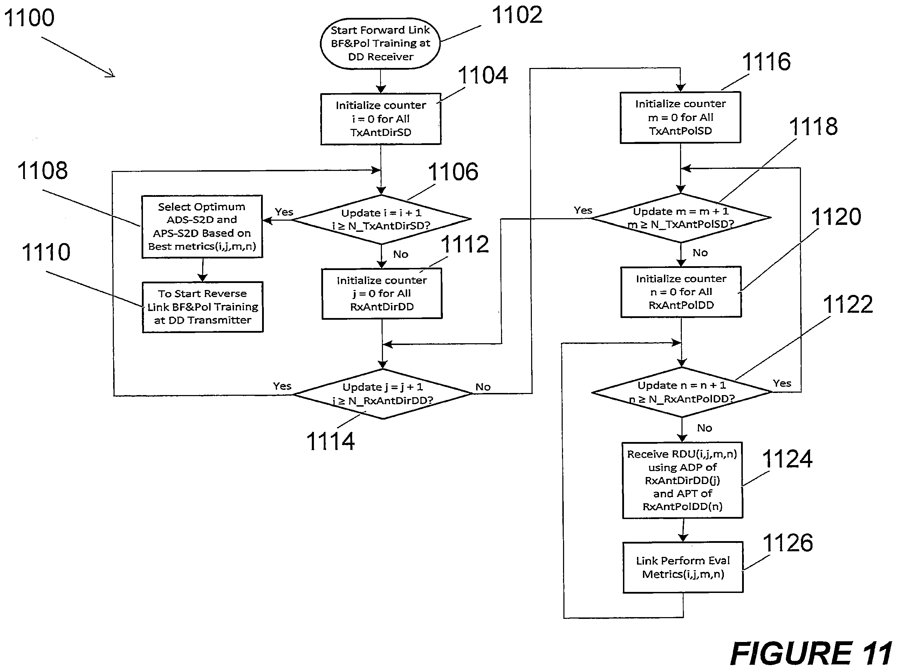

When directional antennas are available, directional pattern training may be combined with polarization training. The techniques described above can be used for any of the combinations of the directional patterns. That is, the polarization training can be embedded as an inner loop of the directional pattern training procedure, an example of which is described below for the forward link direction in connection with Figures 10 and 11. One skilled in the art would appreciate that a similar example could be constructed for the reverse link direction. In some embodiments, the directional pattern training can be placed in an inner loop of the polarization training process. That is, the directional pattern training can be based on a particular APS set by a polarization training outer loop.

Turning now specifically to Figure 10, a flow chart of a method 1000 is shown. The method 1000 may be used to perform joint beam forming (BF) and polarization training for a forward link at a SD.

In block 1002, the method 1000 may start.

In block 1004, a counter (i) may be initialized (e.g., i=0) for all TxAntDirSD.

In block 1006, the counter (i) may be incremented (e.g., i=i+1). As part of block 1006, a determination may be made whether the counter (i) is greater than or equal to N_TxAntDirSD. If so (e.g., the "Yes" path is taken out of block 1006), flow may proceed to block 1008 to start reverse link training at the SD receiver. Otherwise (e.g., the "No" path is taken out of block 1006), flow may proceed from block 1006 to block 1010.

In block 1010, a second counter (j) may be initialized (e.g., j=0) for all RxAntDirDD.

In block 1012, the second counter (j) may be incremented (e.g., j=j+1). As part of block 1012, a determination may be made whether the second counter (j) is greater than or equal to N_RxAntDirDD. If so (e.g., the "Yes" path is taken out of block 1012), flow may proceed from block 1012 to block 1006. Otherwise (e.g., the "No" path is taken out of block 1012), flow may proceed from block 1012 to block 1014.

In block 1014, a third counter (m) may be initialized (e.g., m=0) for all TxAntPolSD.

In block 1016, the third counter (m) may be incremented (e.g., m=m+1). As part of block 1016, a determination may be made whether the counter (m) is greater than or equal to N_TxAntPolSD. If so (e.g., the "Yes" path is taken out of block 1016), flow may proceed to block 1012. Otherwise (e.g., the "No" path is taken out of block 1016), flow may proceed from block 1016 to block 1018.

In block 1018, a TDU may be constructed based on the TxAntDirSD(i) and/or TxAntPolSD(m).

In block 1020, a fourth counter (n) may be initialized (e.g., n=0) for all RxAntPolDD.

In block 1022, the fourth counter (n) may be incremented (e.g., n=n+1). As part of block 1022, a determination may be made whether the fourth counter (n) is greater than or equal to N_RxAntPolDD. If so (e.g., the "Yes" path is taken out of block 1022), flow may proceed from block 1022 to block 1018. Otherwise (e.g., the "No" path is taken out of block 1022), flow may proceed from block 1022 to block 1024.

In block 1024, the TDU constructed in block 1018 may be transmitted using the ADP of TxAntDirSD(i) and the APT of TxAntPolSD(m). Flow may proceed from block 1024 to block 1022.

Turning now specifically to Figure 11, a flow chart of a method 1100 is shown. The method 1100 may be used to perform joint beam forming (BF) and polarization training for a forward link at a DD.

In block 1102, the method 1100 may start.

In block 1104, a counter (i) may be initialized (e.g., i=0) for all TxAntDirSD.

In block 1106, the counter (i) may be incremented (e.g., i=i+1). As part of block 1106, a determination may be made whether the counter (i) is greater than or equal to N_TxAntDirSD. If so (e.g., the "Yes" path is taken out of block 1106), flow may proceed to block 1108. Otherwise (e.g., the "No" path is taken out of block 1106), flow may proceed from block 1106 to block 1112.

In block 1108, the optimum antenna directional scheme (ADS) for the forward link direction (ADS-S2D) and/or the optimum APS for the forward link direction (APS-S2D) may be selected. The selection(s) may be based on one or more metrics.

In block 1110, reverse link joint BF and polarization training may be started at the DD transmitter.

In block 1112, a second counter (j) may be initialized (e.g., j=0) for all RxAntDirDD.

In block 1114, the second counter (j) may be incremented (e.g., j=j+1). As part of block 1114, a determination may be made whether the second counter (j) is greater than or equal to N_RxAntDirDD. If so (e.g., the "Yes" path is taken out of block 1114), flow may proceed to block 1106. Otherwise (e.g., the "No" path is taken out of block 1114), flow may proceed from block 1114 to block 1116.

In block 1116, a third counter (m) may be initialized (e.g., m=0) for all TxAntPolSD.

In block 1118, the third counter (m) may be incremented (e.g., m=m+1). As part of block 1118, a determination may be made whether the third counter (m) is greater than or equal to N_TxAntPolSD. If so (e.g., the "Yes" path is taken out of block 1118), flow may proceed to block 1114. Otherwise (e.g., the "No" path is taken out of block 1118), flow may proceed from block 1118 to block 1120.

In block 1120, a fourth counter (n) may be initialized (e.g., n=0) for all RxAntPolDD.

In block 1122, the fourth counter (n) may be incremented (e.g., n=n+1). As part of block 514, a determination may be made whether the fourth counter (n) is greater than or equal to N_RxAntPolDD. If so (e.g., the "Yes" path is taken out of block 1122), flow may proceed from block 1122 to block 1118. Otherwise (e.g., the "No" path is taken out of block 1122), flow may proceed from block 1122 to block 1124.

In block 1124, the DD may receive an RDU(i,j,m,n) using an ADP of RxAntDirDD(j) and an APT of RxAntPolDD(n).

In block 1126, a performance evaluation of the link may be performed. The performance evaluation may be based on the polarization type and antenna direction of the transmitter in the SD (which may be based on the counter m and the counter i, respectively) and the polarization type and antenna direction of the receiver in the DD (which may be based on the counter n and the counter j, respectively). The performance evaluation may be stored for purposes of comparison and selection in block 1108.

In some embodiments, the directional pattern training may be performed separately from the polarization training. An example is described further below.

In some instances, the forward link and the reverse link are reciprocal. For example, both the transmitter and receiver in the SD and DD may share the same antenna sectors or antenna arrays. The optimum APS-D2S might be equivalent to the optimum APS-S2D, and the reverse link training can be simplified in this case by using a single APT from the optimum APS-S2D in the transmitter of the DD. The SD may still need to go through all or part of the APTs with the SD receiver to find out the best APT associated with the APS-S2D for the reverse link. The training process can be terminated once a RDU can be successfully decoded and the best APT can be retrieved from the RDU.

It can be generalized that both sector sweep and beam refinement/tracking in the beam forming (BF) training of IEEE 802.11ad are conducted by changing the antenna directional patterns (ADPs). The numbers of TX and RX antenna directional patterns may be defined by the notations above. A pair of such TX and RX ADPs, called antenna directivity scheme (ADS), uniquely determines the radio transmission paths (i.e., indirect paths and/or the direct path) when the transmitter and the receiver placements are fixed.

An approach to polarization optimization may be a joint optimization process with the directional patterns training. Specifically, given a pair of antenna directional patterns, e.g., TxAntDirSD(*i*) and RxAntDirDD(*j*) for the forward link, the radio link performance may be evaluated over all combinations of transmit and receive antenna polarization types (APTs) {TxAntPolSD(*m*), RxAntPolDD(*n*)} where the APTs may be defined by the notations above. It may be assumed that the total numbers of TX and RX antenna polarization types are N_TxAntPolSD and N_RxAntPolDD, as defined respectively by the notations above (e.g., N_TxAntPolSD = N_RxAntPolDD = 4 for TX/RX polarization types being HLP, VLP, LHCP, and RHCP). The "best" transmit and receive antenna polarization types are determined by conducting link performance measurement with some pre-defined algorithms, e.g., by evaluating the SNRs, the uncoded BERs, etc. The total number of transmitted data units (TDUs) that may be required for both the polarization optimization and the beamforming training for the example of forward link is: N_TxAntDirSD × N_RxAntDirDD × N_TxAntPolSD × N_RxAntPolDD, where '×' signifies multiplication.

The block diagrams described above show the details of the training process when combining beam forming training with the polarization training for the example of forward link. The training processes may start simultaneously on both SD and the DD, as shown in Figure 10 and Figure 11, respectively. The outcome may be a joint optimization of the antenna directivity scheme, ADS-S2D, and the antenna polarization scheme, APS-S2D.

Similar processes with additional feedback information of both the optimum ADS-S2D and the optimum APS-S2D can be applied to the reverse link. The final reverse link feedback process may include both the optimum ADS-D2S and the optimum APS-D2S sent from the SD to the DD. Diagrams/figures for the reverse link training and the reverse link feedback processes are omitted, as it is straightforward to one of skill in the art to derive them from Figures 4-11.

Pre-networking is a process that may occur before a device establishes an association with a serving network maintained by a network controller. The controller might not have the information of the device beforehand. The controller may transmit one or more broadcast signals (BSs) periodically in order to have devices acquire information (e.g., synchronization information) and to be associated with the network. In IEEE 802.11ad, for example, the controller can be an Access Point (AP) or a personal basic service set (PBSS) control point (PCP). Beacon frames may be transmitted by the AP or PCP in beacon intervals.

The forward link (from a network controller, which is served as an SD, to any DD) polarization training may be devised by including the controller's APT information in the broadcast signal (BS), which is a form of the TDU described above. A set of N_TxAntPolSD BSs may be transmitted using APTs corresponding to the APT information in each of the signals. The whole set of BSs can be located within a broadcast signal repetition interval (BSRI) or extended to multiple BSRIs. To facilitate the polarization training in an SD, the same set of the BSs may be transmitted periodically across one BSRI or multiple BSRIs. The schedule information for BSs and BSRIs may be included in each of the BSs. The DD may start in a scanning mode with one of the APTs available to it until it successfully receives a BS with an APT. The DD may then learn the APTs information of the SD (controller), the schedule of the BS for the network, the synchronization information, etc. The DD can select the optimum APS-S2D based on the best metrics of all the received BSs with all the APSs between the SD and itself.

The reverse link polarization training and the feedback process can be scheduled in specific time slots by the controller and can be done in slots in a manner similar to that described above. The reverse link training might only be scheduled and started after successful forward link training.

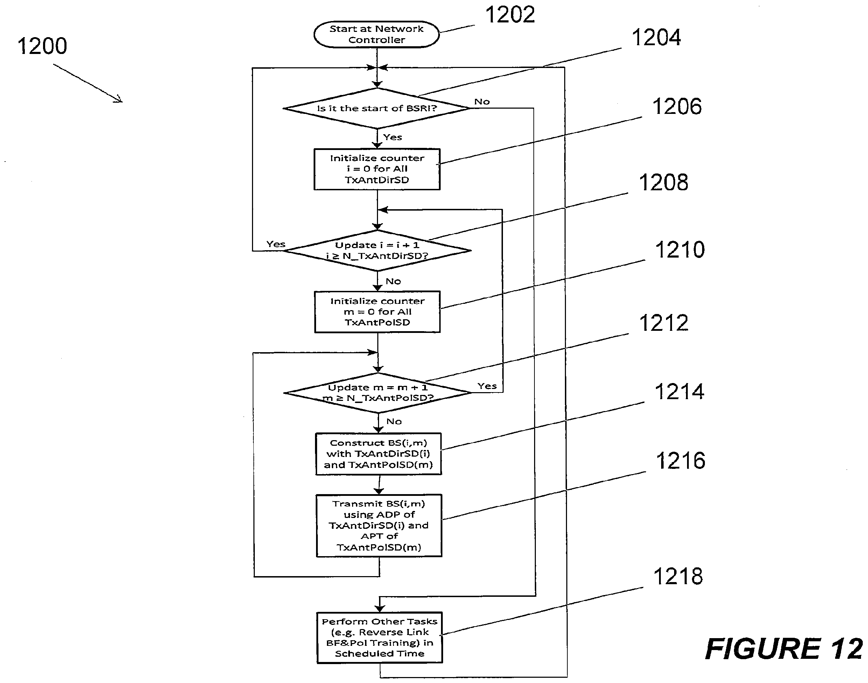

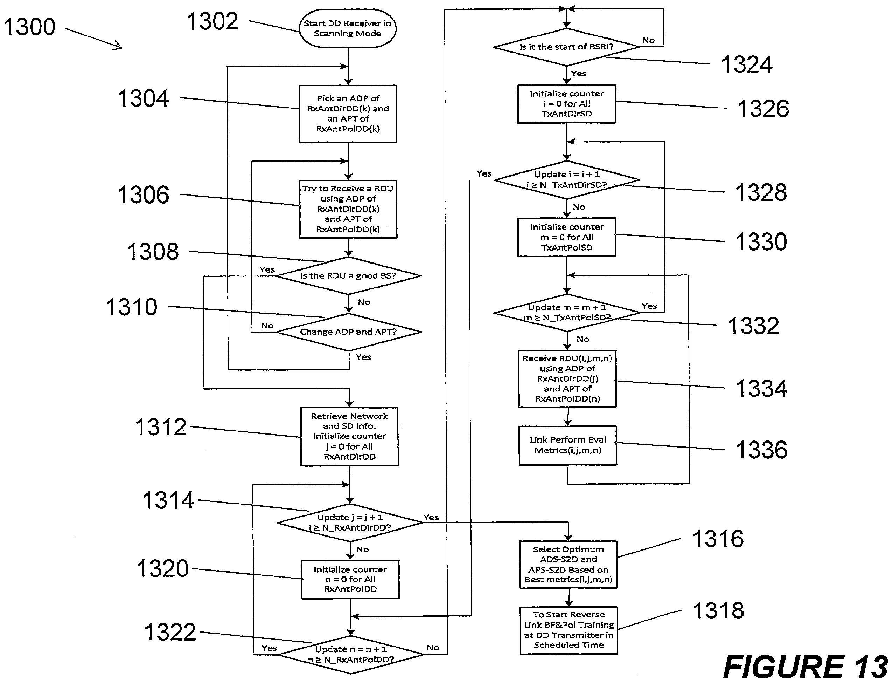

In some embodiments, when directional antennas are used by the controller and the DD, the best approach may be to combine the beam forming (BF) training with the polarization training. Polarization training at the pre-networking stage can be applied to any pair of antenna directional patterns of the TX and RX in the controller and a DD. That is, the polarization training can be placed in the most inner loop of the BF training. Figures 12 and 13 illustrate the combined training in this optimization approach. Alternatively, the BF training can be placed in the most inner loop of the polarization training. That is, the BF process can be applied to any pair of antenna polarization types.

Turning now specifically to Figure 12, a flow chart of a method 1200 is shown. The method 1200 may be used to perform joint beam forming (BF) and polarization optimization for a forward link during pre-networking at a network controller (or SD).

In block 1202, the method 1200 may start.

In block 1204, a determination may be made whether it is the start of a BSRI. If so (e.g., the "Yes" path is taken out of block 1204), flow may proceed to block 1206. Otherwise, (e.g., the "No" path is taken out of block 1204), flow may proceed from block 1204 to block 1218.

In block 1206, a counter (i) may be initialized (e.g., i=0) for all TxAntDirSD.

In block 1208, the counter (i) may be incremented (e.g., i=i+1). As part of block 1208, a determination may be made whether the counter (i) is greater than or equal to N_TxAntDirSD. If so (e.g., the "Yes" path is taken out of block 1208), flow may proceed to block 1204. Otherwise (e.g., the "No" path is taken out of block 1208), flow may proceed from block 1208 to block 1210.

In block 1210, a second counter (m) may be initialized (e.g., m=0) for all TxAntPolSD.

In block 1212, the second counter (m) may be incremented (e.g., m=m+1). As part of block 1212, a determination may be made whether the second counter (m) is greater than or equal to N_TxAntPolSD. If so (e.g., the "Yes" path is taken out of block 1212), flow may proceed from block 1212 to block 1208. Otherwise (e.g., the "No" path is taken out of block 1212), flow may proceed from block 1212 to block 1214.

In block 1214, a BS may be constructed based on the TxAntDirSD(i) and/or TxAntPolSD(m).

In block 1216, the BS constructed in block 1214 may be transmitted using the ADP of TxAntDirSD(i) and the APT of TxAntPolSD(m). Flow may proceed from block 1216 to block 1212.

In block 1218, other tasks, such as reverse link BF and polarization training, may be performed in scheduled time slots.

Turning now specifically to Figure 13, a flow chart of a method 1300 is shown. The method 1300 may be used to perform joint beam forming (BF) and polarization optimization for a forward link during pre-networking at a DD.

In block 1302, the method 300 may start.

In block 1304, an ADP of RxAntDirDD(k) and an APT of RxAntPolDD(k) may be selected.

In block 1306, an attempt may be made to receive a RDU using the selected ADP and APT of block 1304.

In block 1308, a determination may be made whether the RDU of block 1306 is a "good" BS. A good BS may be one that satisfies one or more signal quality related parameters, such as having one or more of a specified RSSI, SNR, BER, etc. and successfully passes the decoding and the CRC, if any.

If, in block 1308, it is determined that the RDU is a good BS (e.g., the "Yes" path is taken out of block 1308), flow may proceed to block 1312. Otherwise (e.g., the "No" path is taken out of block 1308), flow may proceed from block 1308 to block 1310.

In block 1310, a determination may be made whether one or both of the ADP and APT selected in block 1304 should be changed. For example, if additional ADPs or APTs are available for use and if no RDUs of a good BS have been received with the current ADP/APT for an extended time period (predetermined), then a determination may be made to change the ADP and/or APT. Otherwise, the ADP and APT may be maintained.

If, in block 1310, it is determine that the ADP and/or APT should be changed (e.g., the "Yes" path is taken out of block 1310), flow may proceed to block 1304. Otherwise (e.g., the "No" path is taken out of block 1310), flow may proceed from block 1310 to block 1306.

In block 1312, network and SD information may be retrieved. As part of block 1312, a counter (j) may be initialized (e.g., j=0) for all RxAntDirDD.

In block 1314, the counter (j) may be incremented (e.g., j=j+1). As part of block 1314, a determination may be made whether the counter (j) is greater than or equal to N_RxAntDirDD. If so (e.g., the "Yes" path is taken out of block 1314), flow may proceed from block 1314 to block 1316. Otherwise (e.g., the "No" path is taken out of block 1314), flow may proceed from block 1314 to block 1320.

In block 1316, the optimum ADS-S2D and/or the optimum APS-S2D may be selected. The selection(s) may be based on one or more metrics.

In block 1318, reverse link BF and polarization training at the DD transmitter may be started. The reverse link training may occur in accordance with a schedule.

In block 1320, a second counter (n) may be initialized (e.g., n=0) for all RxAntPolDD.

In block 1322, the second counter (n) may be incremented (e.g., n=n+1). As part of block 1322, a determination may be made whether the second counter (n) is greater than or equal to N_RxAntPolDD. If so (e.g., the "Yes" path is taken out of block 1322), flow may proceed from block 1322 to block 1314. Otherwise (e.g., the "No" path is taken out of block 1322), flow may proceed from block 1322 to block 1324.

In block 1324, a determination may be made whether it is the start of a BSRI. If so (e.g., the "Yes" path is taken out of block 1324), flow may proceed to block 1326. Otherwise, (e.g., the "No" path is taken out of block 1324), flow may remain at block 1324.

In block 1326, a third counter (i) may be initialized (e.g., i=0) for all TxAntDirSD.

In block 1328, the third counter (i) may be incremented (e.g., i=i+1). As part of block 1328, a determination may be made whether the third counter (i) is greater than or equal to N_TxAntDirSD. If so (e.g., the "Yes" path is taken out of block 1328), flow may proceed from block 1328 to block 1322. Otherwise (e.g., the "No" path is taken out of block 1328), flow may proceed from block 1328 to block 1330.

In block 1330, a fourth counter (m) may be initialized (e.g., m=0) for all TxAntPolSD.

In block 1332, the fourth counter (m) may be incremented (e.g., m=m+1). As part of block 1332, a determination may be made whether the fourth counter (m) is greater than or equal to N_TxAntPolSD. If so (e.g., the "Yes" path is taken out of block 1332), flow may proceed from block 1332 to block 1328. Otherwise (e.g., the "No" path is taken out of block 1332), flow may proceed from block 1332 to block 1334.

In block 1334, an RDU may be used using an ADP of RxAntDirDD(j) and an APT of RxAntPolDD(n).

In block 1336, a performance evaluation of the link may be performed. The performance evaluation may be based on the polarization type (which may be based on the counter m) and antenna direction (which may be based on the counter i) of the transmitter in the SD and the polarization type (which may be based on the counter n) and antenna direction (which may be based on the counter j) of the receiver in the DD. The performance evaluation may be stored for purposes of comparison and selection in block 1336.

It may be assumed in connection with Figure 12 and/or Figure 13 that a set of N TxAntDirSD and N_TxAntPolSD BSs are transmitted in one BSRI and the whole set is repeated every BSRI. One skilled in the art would appreciate that the set could be partially transmitted in one BSRI and extended across multiple BSRIs as described above.

In some embodiments, a refinement may be made to a selected APS. For example, the optimum APS may be adjusted with a fine tuning of the ADP, e.g., at the beam refinement and tracking stages specified in IEEE 802.1 lad because a slight change in an antenna's steering angles may cause part or all of the reflections below or above the threshold of Brewster angle. In a LOS environment, it might not be necessary to perform polarization optimization refinement. However, in a NLOS environment, even a fine adjustment on the transmit antenna beam may result in a change in angles of reflections such that the polarization characteristics in a radio link may also change.

Polarization optimization refinement and tracking may be conducted along with beam forming refinement/tracking. The procedure may be the same as a general process for any given ADS.

As described above, the TX and RX antenna directions may yield a significant impact on the link polarization characteristics. Also, as described above, polarization training may be integrated with beam forming training. However, when the number of ADPs to be trained and the number of APTs to be optimized is relatively large (e.g., greater than a threshold), the complexity of the training procedure is high.

One approach to reduce the complexity of the training is to decouple the beam forming and the polarization optimization. The decoupling may be possible when both the TX and the RX antennas can be set to a quasi-omni pattern. Although the antenna gain with a quasi-omni pattern may be reduced, this special antenna directional scheme makes it possible to perform the polarization training independent of the beam forming training. Specifically, the polarization optimization can be done separately before the beam forming training. Because the number of ADPs may be reduced to one for both TX and RX, the total number of iterations for the polarization optimization may be reduced to the number of combinations of APS (e.g., N_TxAntPolSD × N_RxAntPolDD for a forward link). It can be verified that for the LOS environment, the best pair of TX and RX antenna polarizations with TX/RX beam forming is the same as TX/RX antenna polarizations optimized with quasi-omni TX/RX antennas. For the NLOS environment, this approach is suboptimal. One possible remedy is to perform a refinement for the polarization optimization as described above.

To simplify the polarization optimization process, either the TX or the RX antenna polarization type can be fixed through polarization optimization to further reduce the number of combinations of the APSs. In this case, either the N_TxAntPolSD or the N_RxAntPolDD for the forward link and/or either the N_TxAntPolDD or the N_RxAntPolSD for the reverse link can be reduced to one.

In some instances, a receiver may be able to conclude before the end of a full optimization process that the optimum link has been reached by some a priori knowledge of the performance metrics. The receiver may choose to early terminate the optimization process by signaling the transmitter if a feedback channel is available, or may simply stop the receiving process regardless of whether a feedback channel is available. The early termination may reduce the time and/or the energy consumed as a result of the optimization process.

Embodiments of the disclosure may be tied to one or more particular machines. For example, one or more transmitters or receivers may be used to train an antenna with respect to one or more polarization types or antenna direction. The training may be conducted to minimize the impact resulting from losses, such as polarization mismatch loss (PML), receiver processing loss (RPL), etc.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments of the disclosure may be implemented using one or more technologies. In some embodiments, an apparatus or system may include one or more processors, and memory storing instructions that, when executed by the one or more processors, cause the apparatus or system to perform one or more methodological acts, such as those described herein. Various mechanical components known to those of skill in the art may be used in some embodiments.

Embodiments of the disclosure may be implemented as one or more apparatuses, systems, and/or methods. In some embodiments, instructions may be stored on one or more computer program products or computer-readable media, such as a transitory and/or non-transitory computer-readable medium. The instructions, when executed, may cause an entity (e.g., an apparatus or system) to perform one or more methodological acts, such as those described herein. In some embodiments, the functionality described herein may be implemented in hardware, software, firmware, or any combination thereof.

## Claims

1. A method for providing communication between a first device (202) and a second device (202), the method comprising:
iterating (404, 406), by the first device (202), over a first number of transmitter antenna polarization types in the first device;
iterating (1004, 1006), by the first device (202), for a given transmitter antenna polarization type, over a second number of transmitter antenna directional patterns in the first device (202); and constructing (410), by the first device (202), a number of data units based on each of the transmitter antenna polarization types;
transmitting (416), by the first device (202), each of the data units for each of a number of receiver antenna polarization types (412, 414) in the second device (202);
receiving (616), by the first device (202), an indication (610) of a transmitter antenna polarization type in the first device (202) included in the number of transmitter antenna polarization types in the first device (202);
receiving (1108), by the first device (202), along with the indication of a transmitter antenna polarization type in the first device (202), an indication of a transmitter antenna directional pattern in the first device (202) included in the number of transmitter antenna directional patterns in the first device (202), and
transmitting (806), by the first device (202), data using the indicated transmitter antenna polarization;
wherein the constructed number of data units is based on a multiplication of the first number and the second number.

2. The method of claim 1, further comprising:
iterating (704, 706), by the first device (202), over a number of transmitter antenna polarization types in the second device (202);
iterating (712, 714), by the first device (202), over a number of receiver antenna polarization types in the first device (202);
receiving (716), by the first device (202), a number of data units based on each of the transmitter antenna polarization types in the second device (202) using each of the receiver antenna polarization types in the first device (202); and
selecting (708), by the first device, a transmitter antenna polarization type for the second device (202) included in the transmitter antenna polarization types in the second device (202) and a receiver antenna polarization type for the first device (202) included in the receiver antenna polarization types in the first device (202).

3. The method of claim 2, wherein the transmitted data (806) comprises an indication of the selected transmitter antenna polarization type for the second device (202).

4. The method of claim 2, further comprising:
receiving, by the first device (202), second data using the selected receiver antenna polarization type for the first device.

5. The method of any of the preceding claims, further comprising:
periodically broadcasting (1210-1216) the transmitter antenna polarization types in the first device (202) during a pre-networking stage,
wherein the number of receiver antenna polarization types in the second device (202) is determined based on information obtained following the pre-networking stage.

6. The method of any of the preceding claims, further comprising:
receiving (616), by the first device (202), a second indication (610) of a second transmitter antenna polarization type in the first device (202) included in the number of transmitter antenna polarization types in the first device (202); and
transmitting (806), by the first device (202), second data using the indicated second transmitter antenna polarization type.

7. The method of any of the preceding claims, wherein the communication between the first device (202) and the second device (202) is based on millimeter electromagnetic (EM) waves and a carrier frequency associated with the millimeter waveband.

8. A device (202) comprising:
at least one processor (110); and
a memory (130, 140, 150) having instructions stored thereon that, when executed by the at least one processor (110), cause the device (202) to:
iterate (404, 406) over a first number of transmitter antenna polarization types in the device (202);
iterate (1004, 1006), for a given transmitter antenna polarization type, over a second number of transmitter antenna directional patterns in the device (202) among a plurality of different transmitter antenna directional patterns;
construct (410) a number of data units based on each of the transmitter antenna polarization types;
transmit (416)each of the data units for each of a number of receiver antenna polarization types in a second device (202);
receive (616), from the second device (202), an indication (610) of a transmitter antenna polarization type in the device (202) included in the number of transmitter antenna polarization types in the device (202);
receive (1108), from the second device (202), along with the indication of a transmitter antenna polarization type in the device (202), an indication of a transmitter antenna directional pattern in the device (202) included in the number of transmitter antenna directional patterns in the device (202), and
transmit (806) data using the indicated transmitter antenna polarization type;
wherein the constructed number of data units is based on a multiplication of the first number and the second number.

9. The device (202) of claim 8, wherein the instructions, when executed by the at least one processor (110), cause the device (202) to:
iterate (704, 706) over a number of transmitter antenna polarization types in the second device (202);
iterate (712, 714)over a number of receiver antenna polarization types in the device (202);
receive (716) a number of data units based on each of the transmitter antenna polarization types in the second device (202) using each of the receiver antenna polarization types in the device (202); and
select (708) a transmitter antenna polarization type for the second device (202) included in the transmitter antenna polarization types in the second device (202) and a receiver antenna polarization type in the device (202) included in the receiver antenna polarization types in the device (202).

10. The device (202) of claim 9, wherein the transmitted data (806) comprises an indication of the selected transmitter antenna polarization type for the second device (202).

11. The device (202) of any of claims 8 through 10, wherein the number of receiver antenna polarization types in the second device (202) is determined based on information obtained following a pre-networking stage, and wherein the instructions, when executed by the at least one processor (110), cause the device (202) to:
periodically broadcast (1210-1216) the transmitter antenna polarization types in the device (202) in intervals during the pre-networking stage, wherein each broadcast interval comprises at least one of the transmitter antenna polarization types.

12. The device (202) of any of claims 8 through 11, wherein the instructions, when executed by the at least one processor (110), cause the device (202) to:
receive (616) a second indication (610) of a second transmitter antenna polarization type in the device (202) included in the number of transmitter antenna polarization types in the device (202); and
transmit (806) second data using the indicated second transmitter antenna polarization type.

13. The device (202) of any of claims 8 through 12, wherein a communication between the device (202) and the second device (202) is based on millimeter electromagnetic (EM) waves and a carrier frequency associated with the millimeter wave band.

14. A system comprising:
a first device (202) configured to transmit (416) to a second device (202) a plurality of data units based on a first number (404, 406) of transmitter antenna polarization types and a second number of transmitter antenna directional patterns for a given transmitter antenna polarisation type in the first device (202) and a number (412, 414) of receiver antenna polarization types in the second device (202); and
the second device (202) is configured to
receive (516) the plurality of data units,
select (508) a transmitter antenna polarization type and a transmitter antenna directional pattern for the first device (202) and a receiver antenna polarization type for the second device (202) based on an evaluation of a performance of a communication link (518) between the first device (202) and the second device (202) for each of the plurality of data units, and
transmit (616) an indication (610) of the selected transmitter antenna polarization type and an indication of the selected transmitter antenna directional pattern for the first device (202) to the first device (202); wherein the second device (202) is configured to receive each of the plurality of data units a total number of times based on a multiplication of the first number and the second number; and
wherein the second device (202) is configured to receive each of the plurality of data units using each of the receiver antenna polarization types (512, 514) in the second device (202).

15. The system of claim 14, wherein the first device (202) is configured to transmit data using the selected transmitter antenna polarization type for the first device(202), and wherein the second device (202) is configured to receive the data using the selected receiver antenna polarization type for the second device (202).

16. The system of claim 14 or claim 15, wherein the performance evaluation (518) for each of the plurality of data units is based on at least one of a received signal strength indication (RSSI), a signal to noise ratio (SNR), and a bit error rate (BER).

17. The system of any of claims 14 through 16, wherein the second device (202) is configured to transmit to the first device (202) a second plurality of data units based on a number of transmitter antenna polarization types (604, 606) in the second device (202) and a number of receiver antenna polarization types (612, 614) in the first device (202), and wherein the first device (202) is configured to receive (716) the second plurality of data units, select (708) a transmitter antenna polarization type for the second device and a receiver antenna polarization type for the first device based on an evaluation of a performance of the communication link (718) between the first device (202) and the second device (202) for each of the second plurality of data units, and transmit (806) an indication of the selected transmitter antenna polarization type for the second device (202) to the second device (202).

18. The system of claim 17, wherein the second device (202) is configured to transmit data using the selected transmitter antenna polarization type for the second device (202), and wherein the first device (202) is configured to receive the data using the selected receiver antenna polarization type for the first device (202).

19. The system of any of claims 14 through 18, wherein the plurality of data units is based on a number of transmitter antenna directional patterns (1004, 1006) in the first device (202) and a number of receiver antenna directional patterns (1010, 1012) in the second device (202).

## Patentansprüche

1. Verfahren zum Vorsehen von Kommunikation zwischen einem ersten Gerät (202) und einem zweiten Gerät (202), das Verfahren umfassend:
Iterieren (404, 406), durch das erste Gerät (202), über eine erste Anzahl von Sendeantennenpolarisationsarten im ersten Gerät;
Iterieren (1004, 1006), durch das erste Gerät (202), für eine gegebene Sendeantennenpolarisationsart, über eine zweite Anzahl von Sendeantennenrichtungsmustern im ersten Gerät (202); und Konstruieren (410), durch das erste Gerät (202), einer Anzahl von Dateneinheiten basierend auf jeder der Sendeantennenpolarisationsarten;
Übertragen (416), durch das erste Gerät (202), von jeder der Dateneinheiten für jede einer Anzahl von Sendeantennenpolarisationsarten (412, 414) im zweiten Gerät (202);
Empfangen (616), durch das erste Gerät (202), einer Anzeige (610) einer Sendeantennenpolarisationsart im ersten Gerät (202), die in der Anzahl von Sendeantennenpolarisationsarten im ersten Gerät (202) enthalten ist;
Empfangen (1108), durch das erste Gerät (202), zusammen mit der Anzeige einer Sendeantennenpolarisationsart im ersten Gerät (202), einer Anzeige eines Sendeantennenrichtungsmusters im ersten Gerät (202), das in der Anzahl von Sendeantennenrichtungsmustern im ersten Gerät (202) enthalten ist, und
Übertragen (806), durch das erste Gerät (202), von Daten unter Benutzung der angezeigten Sendeantennenpolarisation;
wobei die konstruierte Anzahl von Dateneinheiten auf einer Multiplikation der ersten Anzahl und der zweiten Anzahl basiert.

2. Verfahren nach Anspruch 1, ferner umfassend:
Iterieren (704, 706), durch das erste Gerät (202), über eine Anzahl von Sendeantennenpolarisationsarten im zweiten Gerät (202);
Iterieren (712, 714), durch das erste Gerät (202), über eine Anzahl von Empfangsantennenpolarisationsarten im ersten Gerät (202);
Empfangen (716), durch das erste Gerät (202), einer Anzahl von Dateneinheiten basierend auf jeder der Sendeantennenpolarisationsarten im zweiten Gerät (202) unter Benutzung von jeder der Empfangsantennenpolarisationsarten im ersten Gerät (202); und
Auswählen (708), durch das erste Gerät (202), einer Sendeantennenpolarisationsart für das zweite Gerät (202), die in den Sendeantennenpolarisationsarten im zweiten Gerät (202) enthalten ist, und einer Empfangsantennenpolarisationsart für das erste Gerät (202), die in den Empfangsantennenpolarisationsarten im ersten Gerät (202) enthalten ist.

3. Verfahren nach Anspruch 2, wobei die übertragenen Daten (806) eine Anzeige der ausgewählten Sendeantennenpolarisationsart für das zweite Gerät (202) umfassen.

4. Verfahren nach Anspruch 2, ferner umfassend:
Empfangen, durch das erste Gerät (202), von zweiten Daten unter Benutzung der ausgewählten Empfangsantennenpolarisationsart für das erste Gerät.

5. Verfahren nach einem der vorhergehenden Ansprüche, ferner umfassend:
periodisches Rundsenden (1210 bis 1216) der Sendeantennenpolarisationsarten im ersten Gerät (202) während einer Vorvernetzungsphase,
wobei die Anzahl von Empfangsantennenpolarisationsarten im zweiten Gerät (202) basierend auf Information bestimmt wird, die der Vorvernetzungsphase nachfolgend erhalten wird.

6. Verfahren nach einem der vorhergehenden Ansprüche, ferner umfassend:
Empfangen (616), durch das erste Gerät (202), einer zweiten Anzeige (610) einer zweiten Sendeantennenpolarisationsart im ersten Gerät (202), die in der Anzahl von Sendeantennenpolarisationsarten im ersten Gerät (202) enthalten ist; und
Übertragen (806), durch das erste Gerät (202), von zweiten Daten unter Benutzung der angezeigten zweiten Sendeantennenpolarisationsart.

7. Verfahren nach einem der vorhergehenden Ansprüche, wobei die Kommunikation zwischen dem ersten Gerät (202) und dem zweiten Gerät (202) auf elektromagnetischen Millimeter- (EM-) Wellen und einer Trägerfrequenz, die mit dem Millimeterwellenband assoziiert ist, basiert.

8. Gerät (202), umfassend:
zumindest einen Prozessor (110); und
einen Speicher (130, 140, 150) mit darin gespeicherten Anweisungen, die, wenn sie durch den mindestens einen Prozessor (110) ausgeführt werden, das Gerät (202) zu Folgendem veranlassen:
Iterieren (404, 406), über eine erste Anzahl von Sendeantennenpolarisationsarten im ersten Gerät (202);
Iterieren (1004, 1006), für eine gegebene Sendeantennenpolarisationsart, über eine zweite Anzahl von Sendeantennenrichtungsmustern im Gerät (202) unter mehreren verschiedenen Sendeantennenrichtungsmustern;
Konstruieren (410) einer Anzahl von Dateneinheiten basierend auf jeder der Sendeantennenpolarisationsarten;
Übertragen (416) von jeder der Dateneinheiten für jede einer Anzahl von Empfangsantennenpolarisationsarten in einem zweiten Gerät (202);
Empfangen (616), vom zweiten Gerät (202), einer Anzeige (610) einer Sendeantennenpolarisationsart im Gerät (202), die in der Anzahl von Sendeantennenpolarisationsarten im Gerät (202) enthalten ist;
Empfangen (1108), vom zweiten Gerät (202), zusammen mit der Anzeige einer Sendeantennenpolarisationsart im Gerät (202), einer Anzeige eines Sendeantennenrichtungsmusters im Gerät (202), das in der Anzahl von Sendeantennenrichtungsmustern im Gerät (202) enthalten ist, und
Übertragen (806) von Daten unter Benutzung der angezeigten Sendeantennenpolarisation;
wobei die konstruierte Anzahl von Dateneinheiten auf einer Multiplikation der ersten Anzahl und der zweiten Anzahl basiert.

9. Gerät (202) nach Anspruch 8, wobei die Anweisungen, wenn sie durch den mindestens einen Prozessor (110) ausgeführt werden, das Gerät (202) zu Folgendem veranlassen:
Iterieren (704, 706) über eine Anzahl von Sendeantennenpolarisationsarten im zweiten Gerät (202);
Iterieren (712, 714) über eine Anzahl von Empfangsantennenpolarisationsarten im Gerät (202);
Empfangen (716) einer Anzahl von Dateneinheiten basierend auf jeder der Sendeantennenpolarisationsarten im zweiten Gerät (202) unter Benutzung von jeder der Empfangsantennenpolarisationsarten im Gerät (202); und
Auswählen (708) einer Sendeantennenpolarisationsart für das zweite Gerät (202), die in den Sendeantennenpolarisationsarten im zweiten Gerät (202) enthalten ist, und einer Empfangsantennenpolarisationsart im Gerät (202), die in den Empfangsantennenpolarisationsarten im Gerät (202) enthalten ist.

10. Gerät (202) nach Anspruch 9, wobei die übertragenen Daten (806) eine Anzeige der ausgewählten Sendeantennenpolarisationsart für das zweite Gerät (202) umfassen.

11. Gerät (202) nach einem der Ansprüche 8 bis 10, wobei die Anzahl von Empfangsantennenpolarisationsarten im zweiten Gerät (202) basierend auf Information bestimmt wird, die einer Vorvernetzungsphase nachfolgend erhalten wird, und wobei die Anweisungen, wenn sie durch den mindestens einen Prozessor (110) ausgeführt werden, das Gerät (202) zu Folgendem veranlassen:
periodisches Rundsenden (1210 bis 1216) der Sendeantennenpolarisationsarten im Gerät (202) in Intervallen während der Vorvernetzungsphase, wobei jeder Rundsendungsintervall zumindest eine der Sendeantennenpolarisationsarten umfasst.

12. Gerät (202) nach einem der Ansprüche 8 bis 11, wobei die Anweisungen, wenn sie durch den mindestens einen Prozessor (110) ausgeführt werden, das Gerät (202) zu Folgendem veranlassen:
Empfangen (616) einer zweiten Anzeige (610) einer zweiten Sendeantennenpolarisationsart im Gerät (202), die in der Anzahl von Sendeantennenpolarisationsarten im Gerät (202) enthalten ist; und
Übertragen (806) von zweiten Daten unter Benutzung der angezeigten zweiten Sendeantennenpolarisationsart.

13. Gerät (202) nach einem der Ansprüche 8 bis 12, wobei eine Kommunikation zwischen dem Gerät (202) und dem zweiten Gerät (202) auf elektromagnetischen Millimeter- (EM-) Wellen und einer Trägerfrequenz, die mit dem Millimeterwellenband assoziiert ist, basiert.

14. System, umfassend:
ein erstes Gerät (202), das zum Übertragen (416), an ein zweites Gerät (202), von mehreren Dateneinheiten basierend auf einer ersten Anzahl (404, 406) von Sendeantennenpolarisationsarten und einer zweiten Anzahl von Sendeantennenrichtungsmustern für eine gegebene Sendeantennenpolarisationsart im ersten Gerät (202) und einer Anzahl (412, 414) von Empfangsantennenpolarisationsarten im zweiten Gerät (202) konfiguriert ist; und
wobei das zweite Gerät (202) konfiguriert ist zum:
Empfangen (516) der mehreren Dateneinheiten,
Auswählen (508) einer Sendeantennenpolarisationsart und eines Sendeantennenrichtungsmusters für das erste Gerät (202) und einer Empfangsantennenpolarisationsart für das zweite Gerät (202) basierend auf einer Einschätzung einer Leistung eines Kommunikationslinks (518) zwischen dem ersten Gerät (202) und dem zweiten Gerät (202) für jede der mehreren Dateneinheiten, und
Übertragen (616) einer Anzeige (610) der ausgewählten Sendeantennenpolarisationsart und einer Anzeige des ausgewählten Sendeantennenrichtungsmusters für das erste Gerät (202) an das erste Gerät (202);
wobei das zweite Gerät (202) zum Empfangen der mehreren Dateneinheiten eine Gesamtanzahl von Malen basierend auf einer Multiplikation der ersten Anzahl und der zweiten Anzahl konfiguriert ist; und wobei das zweite Gerät (202) zum Empfangen von jeder der mehreren Dateneinheiten unter Benutzung von jeder der Empfangsantennenpolarisationsarten (512, 514) im zweiten Gerät (202) konfiguriert ist.

15. System nach Anspruch 14, wobei das erste Gerät (202) zum Übertragen von Daten unter Benutzung der ausgewählten Sendeantennenpolarisationsart für das erste Gerät (202) konfiguriert ist, und wobei das zweite Gerät (202) zum Empfangen der Daten unter Benutzung der ausgewählten Empfangsantennenpolarisationsart für das zweite Gerät (202) konfiguriert ist.

16. System nach einem der Ansprüche 14 oder 15, wobei die Leistungseinschätzung (518) für jede der mehreren Dateneinheiten auf zumindest einem einer Empfangssignalstärkenanzeige (RSSI), einem Signal-Rausch-Verhältnis (SNR) und einer Bitfehlerrate (BER) basiert.

17. System nach einem der Ansprüche 14 bis 16, wobei das zweite Gerät (202) zum Übertragen, an das erste Gerät (202), einer zweiten Vielzahl von Dateneinheiten basierend auf einer Anzahl von Sendeantennenpolarisationsarten (604, 606) im zweiten Gerät (202) und einer Anzahl von Empfangsantennenpolarisationsarten (612, 614) im ersten Gerät (202) konfiguriert ist, und wobei das erste Gerät (202) zum Empfangen (716) der zweiten Vielzahl von Dateneinheiten, zum Auswählen (708) einer Sendeantennenpolarisationsart für das zweite Gerät (202) und einer Empfangsantennenpolarisationsart für das erste Gerät (202) basierend auf einer Einschätzung einer Leistung des Kommunikationslinks (718) zwischen dem ersten Gerät (202) und dem zweiten Gerät (202) für jede der zweiten Vielzahl von Dateneinheiten, und zum Übertragen (806) einer Anzeige der ausgewählten Sendeantennenpolarisationsart für das zweite Gerät (202) an das zweite Gerät (202) konfiguriert ist.

18. System nach Anspruch 17, wobei das zweite Gerät (202) zum Übertragen von Daten unter Benutzung der ausgewählten Sendeantennenpolarisationsart für das zweite Gerät (202) konfiguriert ist, und wobei das erste Gerät (202) zum Empfangen der Daten unter Benutzung der ausgewählten Empfangsantennenpolarisationsart für das erste Gerät (202) konfiguriert ist.

19. System nach einem der Ansprüche 14 bis 18, wobei die mehreren Dateneinheiten auf einer Anzahl von Sendeantennenrichtungsmustern (1004, 1006) im ersten Gerät (202) und einer Anzahl von Empfangsantennenrichtungsmustern (1010, 1012) im zweiten Gerät (202) basieren.

## Revendications

1. Procédé pour assurer une communication entre un premier dispositif (202) et un deuxième dispositif (202), le procédé comprenant les étapes consistant à :
itérer (404, 406), par le premier dispositif (202), sur un premier nombre de types de polarisation d'antenne émettrice dans le premier dispositif ;
itérer (1004, 1006), par le premier dispositif (202), pour un type de polarisation d'antenne émettrice donné, sur un deuxième nombre de diagrammes de directivité d'antenne émettrice dans le premier dispositif (202) ; et construire (410), par le premier dispositif (202), un nombre d'unités de données sur la base de chacun des types de polarisation d'antenne émettrice ;
transmettre (416), par le premier dispositif (202), chacune des unités de données pour chacun d'un nombre de types de polarisation d'antenne réceptrice (412, 414) dans le deuxième dispositif (202) ;
recevoir (616), par le premier dispositif (202), une indication (610) d'un type de polarisation d'antenne émettrice dans le premier dispositif (202) inclus dans le nombre de types de polarisation d'antenne émettrice dans le premier dispositif (202) ;
recevoir (1108), par le premier dispositif (202), avec l'indication d'un type de polarisation d'antenne émettrice dans le premier dispositif (202), une indication d'un diagramme de directivité d'antenne émettrice dans le premier dispositif (202) inclus dans le nombre de diagrammes de directivité d'antenne émettrice dans le premier dispositif (202), et
transmettre (806), par le premier dispositif (202), des données en utilisant la polarisation d'antenne émettrice indiquée ;
dans lequel le nombre construit d'unités de données est basé sur une multiplication du premier nombre et du deuxième nombre.

2. Procédé de la revendication 1, comprenant en outre les étapes consistant à :
itérer (704, 706), par le premier dispositif (202), sur un nombre de types de polarisation d'antenne émettrice dans le deuxième dispositif (202) ;
itérer (712, 714), par le premier dispositif (202), sur un nombre de types de polarisation d'antenne réceptrice dans le premier dispositif (202) ;
recevoir (716), par le premier dispositif (202), un nombre d'unités de données sur la base de chacun des types de polarisation d'antenne émettrice dans le deuxième dispositif (202) en utilisant chacun des types de polarisation d'antenne réceptrice dans le premier dispositif (202) ; et
sélectionner (708), par le premier dispositif, un type de polarisation d'antenne émettrice pour le deuxième dispositif (202) inclus dans les types de polarisation d'antenne émettrice dans le deuxième dispositif (202) et un type de polarisation d'antenne réceptrice pour le premier dispositif (202) inclus dans les types de polarisation d'antenne réceptrice dans le premier dispositif (202).

3. Procédé de la revendication 2, dans lequel les données transmises (806) comprennent une indication du type de polarisation d'antenne émettrice sélectionné pour le deuxième dispositif (202).

4. Procédé de la revendication 2, comprenant en outre l'étape consistant à :
recevoir, par le premier dispositif (202), des deuxièmes données en utilisant le type de polarisation d'antenne réceptrice sélectionné pour le premier dispositif.

5. Procédé de l'une des revendications précédentes, comprenant en outre l'étape consistant à :
diffuser périodiquement (1210-1216) les types de polarisation d'antenne émettrice dans le premier dispositif (202) pendant une étape de pré-mise en réseau,
dans lequel le nombre de types de polarisation d'antenne réceptrice dans le deuxième dispositif (202) est déterminé sur la base d'informations obtenues suite à l'étape de pré-mise en réseau.

6. Procédé de l'une des revendications précédentes, comprenant en outre les étapes consistant à :
recevoir (616), par le premier dispositif (202), une deuxième indication (610) d'un deuxième type de polarisation d'antenne émettrice dans le premier dispositif (202) inclus dans le nombre de types de polarisation d'antenne émettrice dans le premier dispositif (202) ; et
transmettre (806), par le premier dispositif (202), des deuxièmes données en utilisant le deuxième type de polarisation d'antenne émettrice indiqué.

7. Procédé de l'une des revendications précédentes, dans lequel la communication entre le premier dispositif (202) et le deuxième dispositif (202) est basée sur des ondes électromagnétiques (EM) millimétriques et une fréquence porteuse associée à la gamme d'ondes millimétriques.

8. Dispositif (202) comprenant :
au moins un processeur (110) ; et
une mémoire (130, 140, 150) sur laquelle sont stockées des instructions qui, lorsqu'elles sont exécutées par l'au moins un processeur (110), amènent le dispositif (202) à :
itérer (404, 406) sur un premier nombre de types de polarisation d'antenne émettrice dans le dispositif (202) ;
itérer (1004, 1006), pour un type de polarisation d'antenne émettrice donné, sur un deuxième nombre de diagrammes de directivité d'antenne émettrice dans le dispositif (202) parmi une pluralité de différents diagrammes de directivité d'antenne émettrice ;
construire (410) un nombre d'unités de données en se basant sur chacun des types de polarisation d'antenne émettrice ;
transmettre (416) chacune des unités de données pour chacun d'un nombre de types de polarisation d'antenne réceptrice dans un deuxième dispositif (202) ;
recevoir (616), à partir du deuxième dispositif (202), une indication (610) d'un type de polarisation d'antenne émettrice dans le dispositif (202) inclus dans le nombre de types de polarisation d'antenne émettrice dans le dispositif (202) ;
recevoir (1108), à partir du deuxième dispositif (202), avec l'indication d'un type de polarisation d'antenne émettrice dans le dispositif (202), une indication d'un diagramme de directivité d'antenne émettrice dans le dispositif (202) inclus dans le nombre de diagrammes de directivité d'antenne émettrice dans le dispositif (202), et
transmettre (806) des données en utilisant le type de polarisation d'antenne émettrice indiqué ;
dans lequel le nombre construit d'unités de données est basé sur une multiplication du premier nombre et du deuxième nombre.

9. Dispositif (202) de la revendication 8, dans lequel les instructions, lorsqu'elles sont exécutées par l'au moins un processeur (110), amènent le dispositif (202) à :
itérer (704, 706) sur un nombre de types de polarisation d'antenne émettrice dans le deuxième dispositif (202) ;
itérer (712, 714) sur un nombre de types de polarisation d'antenne réceptrice dans le dispositif (202) ;
recevoir (716) un nombre d'unités de données sur la base de chacun des types polarisation d'antenne émettrice dans le deuxième dispositif (202) en utilisant chacun des types de polarisation d'antenne réceptrice dans le dispositif (202) ; et
sélectionner (708) un type de polarisation d'antenne émettrice pour le deuxième dispositif (202) inclus dans les types de polarisation d'antenne émettrice dans le deuxième dispositif (202) et un type de polarisation d'antenne réceptrice dans le dispositif (202) inclus dans les types de polarisation d'antenne réceptrice dans le dispositif (202) .

10. Dispositif (202) de la revendication 9, dans lequel les données transmises (806) comprennent une indication du type de polarisation d'antenne émettrice sélectionné pour le deuxième dispositif (202).

11. Dispositif (202) de l'une des revendications 8 à 10, dans lequel le nombre de types de polarisation d'antenne réceptrice dans le deuxième dispositif (202) est déterminé sur la base d'informations obtenues suite à une étape de pré-mise en réseau, et dans lequel les instructions, lorsqu'elles sont exécutées par l'au moins un processeur (110), amènent le dispositif (202) à :
diffuser périodiquement (1210-1216) les types de polarisation d'antenne émettrice dans le dispositif (202) dans des intervalles pendant l'étape de pré-mise en réseau, où chaque intervalle de diffusion comprend au moins l'un des types de polarisation d'antenne émettrice.

12. Dispositif (202) de l'une des revendications 8 à 11, dans lequel les instructions, lorsqu'elles sont exécutées par l'au moins un processeur (110), amènent le dispositif (202) à :
recevoir (616) une deuxième indication (610) d'un deuxième type de polarisation d'antenne émettrice dans le dispositif (202) inclus dans le nombre de types de polarisation d'antenne émettrice dans le dispositif (202) ; et
transmettre (806) des deuxièmes données en utilisant le deuxième type de polarisation d'antenne émettrice indiqué.

13. Dispositif (202) de l'une des revendications 8 à 12, dans lequel une communication entre le dispositif (202) et le deuxième dispositif (202) est basée sur des ondes électromagnétiques (EM) millimétriques et une fréquence porteuse associée à la gamme d'ondes millimétriques.

14. Système comprenant :
un premier dispositif (202) configuré pour transmettre (416) à un deuxième dispositif (202) une pluralité d'unités de données sur la base d'un premier nombre (404, 406) de types de polarisation d'antenne émettrice et d'un deuxième nombre de diagrammes de directivité d'antenne émettrice pour un type de polarisation d'antenne émettrice donné dans le premier dispositif (202) et d'un nombre (412, 414) de types de polarisation d'antenne réceptrice dans le deuxième dispositif (202) ; et
le deuxième dispositif (202) est configuré pour
recevoir (516) la pluralité d'unités de données,
sélectionner (508) un type de polarisation d'antenne émettrice et un diagramme de directivité d'antenne émettrice pour le premier dispositif (202) et un type de polarisation d'antenne réceptrice pour le deuxième dispositif (202) sur la base d'une évaluation d'une performance d'une liaison de communication (518) entre le premier dispositif (202) et le deuxième dispositif (202) pour chacune de la pluralité d'unités de données, et
transmettre (616) une indication (610) du type de polarisation d'antenne émettrice sélectionné et une indication du diagramme de directivité d'antenne émettrice sélectionné pour le premier dispositif (202) au premier dispositif (202) ;
dans lequel le deuxième dispositif (202) est configuré pour recevoir chacune de la pluralité d'unités de données un nombre total de fois sur la base d'une multiplication du premier nombre et du deuxième nombre ; et
dans lequel le deuxième dispositif (202) est configuré pour recevoir chacune de la pluralité d'unités de données en utilisant chacun des types de polarisation d'antenne réceptrice (512, 514) dans le deuxième dispositif (202).

15. Système de la revendication 14, dans lequel le premier dispositif (202) est configuré pour transmettre des données en utilisant le type de polarisation d'antenne émettrice sélectionné pour le premier dispositif (202), et dans lequel le deuxième dispositif (202) est configuré pour recevoir les données en utilisant le type de polarisation d'antenne réceptrice sélectionné pour le deuxième dispositif (202).

16. Système de la revendication 14 ou 15, dans lequel l'évaluation de performance (518) pour chacune de la pluralité d'unités de données est basée sur au moins l'un parmi une indication d'intensité de signal reçue (RSSI), un rapport signal sur bruit (SNR) et un taux d'erreurs sur les bits (BER).

17. Système de l'une des revendications 14 à 16, dans lequel le deuxième dispositif (202) est configuré pour transmettre au premier dispositif (202) une deuxième pluralité d'unités de données sur la base d'un nombre de types de polarisation d'antenne émettrice (604, 606) dans le deuxième dispositif (202) et d'un nombre de types de polarisation d'antenne réceptrice (612, 614) dans le premier dispositif (202), et dans lequel le premier dispositif (202) est configuré pour recevoir (716) la deuxième pluralité d'unités de données, sélectionner (708) un type de polarisation d'antenne émettrice pour le deuxième dispositif et un type de polarisation d'antenne réceptrice pour le premier dispositif sur la base d'une évaluation d'une performance de la liaison de communication (718) entre le premier dispositif (202) et le deuxième dispositif (202) pour chacune de la deuxième pluralité d'unités de données, et transmettre (806) une indication du type de polarisation d'antenne émettrice sélectionné pour le deuxième dispositif (202) au deuxième dispositif (202).

18. Système de la revendication 17, dans lequel le deuxième dispositif (202) est configuré pour transmettre des données en utilisant le type de polarisation d'antenne émettrice sélectionné pour le deuxième dispositif (202), et dans lequel le premier dispositif (202) est configuré pour recevoir les données en utilisant le type de polarisation d'antenne réceptrice sélectionné pour le premier dispositif (202) .

19. Système de l'une des revendications 14 à 18, dans lequel la pluralité d'unités de données est basée sur un nombre de diagrammes de directivité d'antenne émettrice (1004, 1006) dans le premier dispositif (202) et un nombre de diagrammes de directivité d'antenne réceptrice (1010, 1012) dans le deuxième dispositif (202).
